# EUROPEAN PATENT APPLICATION

(11) **EP 4 780 054 A1**
(43) Date of publication of application: **22.07.2026**
(21) Application number: 24870385.2
(22) Date of filing: 05.09.2024
(51) Int. Cl.: H04W 24/08

(54) **COMMUNICATION METHOD AND COMMUNICATION APPARATUS**

(30) Priority: 28.09.2023 CN 202311291954
(71) Applicant: HUAWEI TECHNOLOGIES CO., LTD., Shenzhen 518129 (CN)
(72) Inventor: TANG, Zhuqing, Shenzhen, Guangdong 518129 (CN); HUANG, Lei, Shenzhen, Guangdong 518129 (CN); DU, Rui, Shenzhen, Guangdong 518129 (CN); NAREN, Gerile, Shenzhen, Guangdong 518129 (CN); HAN, Xiao, Shenzhen, Guangdong 518129 (CN)
(74) Representative: Isarpatent
(86) International application number: PCT/CN2024/117069
(87) International publication number: WO 2025/066839

(57) **Abstract**

This application provides a communication method. The method may be applied to a WLAN system supporting 802.11 series protocols such as a next-generation Wi-Fi protocol of IEEE 802.11ax, for example, 802.11be, Wi-Fi 7, or EHT, and a next-generation protocol of 802.11be, for example, Wi-Fi 8, may be further applied to IEEE 802.11bf and a next-generation protocol thereof, and may be further applied to a UWB-based wireless personal area network system, a sensing system, and the like. The method includes: In a scenario in which a multi-link device participates in sensing by proxy measurement, a sensing by proxy initiator sends, to a sensing by proxy responder, a request message for requesting to set up sensing by proxy measurement. The request message includes first indication information indicating a link onto which a first sensing responder is mapped. The request message carries the information indicating the link, to set up sensing by proxy measurement in the scenario in which the multi-link device participates in sensing by proxy.

## Description

This application claims priority to Chinese Patent Application No. 202311291954.8, filed with the China National Intellectual Property Administration on September 28, 2023 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

As a wireless local area network (wireless local area network, WLAN) has developed to date, 802.11, as one of current mainstream wireless access standards, has been widely commercially applied in the past decade. 802.11bf is a next-generation wireless standard of WLAN sensing (WLAN sensing). WLAN sensing is that a device with a WLAN sensing capability determines a feature of a predetermined target (for example, an object, an animal, or a person) based on a received radio signal in a given environment. The feature includes a distance, a direction, a speed, a movement, a behavior, and the like of the target.

In a scenario in which one access point (access point, AP) separately sets up a sensing relationship with at least two stations (station, STA), sensing measurement may be performed in a sensing by proxy (sensing by proxy, SBP) procedure. For example, a sensing by proxy requesting station (one of the stations) may directly obtain a sensing result of a sensing response station (a remaining station) through the AP. One or both of the access point and the station that participate in the SBP procedure may be a multi-link device that supports a plurality of links.

How to implement SBP setup in a procedure in which the multi-link device participates in sensing becomes an urgent problem to be resolved.

### SUMMARY

This application provides a communication method, to set up sensing by proxy measurement in a scenario in which a multi-link device participates in sensing by proxy.

According to a first aspect, a communication method is provided. The method may be performed by a first multi-link device (multi-link device, MLD), or may be performed by a circuit configured in a first MLD. This is not limited in this application. The first MLD may be an access point (access point, AP) or a non-access point (non-access point, non-AP). For ease of description, the following provides descriptions by using an example in which the first MLD performs the method.

The communication method includes: The first multi-link device MLD generates a request message. The request message is used to request to set up sensing by proxy SBP measurement, the request message includes first indication information, and the first indication information indicates a link onto which a first sensing responder is mapped. The first MLD sends the request message to a second MLD. The first MLD is a sensing by proxy initiator (SBP initiator) in sensing by proxy measurement, the second MLD is a sensing by proxy responder (SBP responder) in sensing by proxy measurement, and the first sensing responder is any one of at least one device, where the sensing by proxy initiator requests to obtain a sensing result of the any one of the at least one device through the sensing by proxy responder.

Based on the foregoing technical solution, in a scenario in which a multi-link device participates in sensing by proxy measurement, a request message sent by the sensing by proxy initiator to the sensing by proxy responder to request to set up sensing by proxy measurement includes a link situation onto which the first sensing responder is mapped, so that the sensing by proxy responder can clearly learn of a requirement of the sensing by proxy initiator for each sensing responder link, thereby facilitating setup of sensing by proxy measurement and improving efficiency of setting up sensing by proxy measurement. In this way, sensing by proxy measurement is set up in the scenario in which the multi-link device participates in sensing by proxy measurement.

With reference to the first aspect, in some implementations of the first aspect, the request message includes information about at least one sensing responder and at least one piece of first indication information respectively corresponding to the at least one sensing responder, the first sensing responder is any one of the at least one sensing responder, and the first indication information is first indication information corresponding to the first sensing responder in the at least one piece of first indication information.

Based on the foregoing technical solution, the request message sent by the sensing by proxy initiator to the sensing by proxy responder may further include information about at least one sensing responder, where the sensing by proxy initiator expects the sensing by proxy responder to obtain a sensing result of the at least one sensing responder, and the at least one piece of first indication information may respectively indicate a link situation corresponding to the at least one sensing responder, so that the sensing by proxy responder can clearly learn of, based on the received request message, link situations corresponding to different sensing responders expected by the sensing by proxy initiator. This facilitates setup of sensing by proxy measurement.

With reference to the first aspect, in some implementations of the first aspect, the method further includes: The first MLD receives a response message from the second MLD. The response message includes information about a sensing responder participating in the SBP measurement and second indication information, and the second indication information indicates a link onto which the sensing responder participating in the SBP measurement is mapped.

Based on the foregoing technical solution, when the request message carries the information about the at least one sensing responder, a response message returned by the sensing by proxy responder in response to the request message carries information about a sensing responder actually participating in sensing by proxy measurement in the at least one sensing responder, and link situation indication information corresponding to the sensing responder participating in sensing by proxy measurement, so that the sensing by proxy initiator can learn of, based on the received response message, the sensing responder actually participating in sensing by proxy measurement and a link situation corresponding to the sensing responder.

With reference to the first aspect, in some implementations of the first aspect, the response message includes a parameter indicating that the response message carries the second indication information.

Based on the foregoing technical solution, to enable the sensing by proxy initiator to clearly learn of whether the response message carries second indication information indicating a link situation of the sensing responder participating in sensing by proxy measurement, the response message may carry the parameter, indicating that the response message carries the second indication information, so that the sensing by proxy initiator can quickly determine, based on the parameter, whether the second indication information exists. This improves a response message parsing rate.

With reference to the first aspect, in some implementations of the first aspect, the response message includes information about a first availability window, and the information about the first availability window includes information about an availability window corresponding to a first link; and the information about the availability window corresponding to the first link includes an identifier of the first link.

Based on the foregoing technical solution, the response message further includes information that is about the first availability window and that indicates an availability window corresponding to a link, so that the sensing by proxy initiator clearly learns of information about availability windows corresponding to different links based on the information about the first availability window, and performs sensing measurement or information transmission in an accurate availability window. This improves performance of sensing by proxy measurement.

With reference to the first aspect, in some implementations of the first aspect, the first indication information further indicates a link onto which a sensing responder participating in the SBP measurement other than the first responder is mapped, and the first sensing responder is any one of a sensing responder participating in the SBP measurement.

Based on the foregoing technical solution, the first indication information may indicate link situations corresponding to all sensing responders participating in sensing measurement. To be specific, for the sensing by proxy initiator, the link situations corresponding to all the sensing responders are the same, and no indication needs to be separately performed for different sensing responders, thereby improving indication efficiency.

With reference to the first aspect, in some implementations of the first aspect, the method further includes: The first MLD receives a response message from the second MLD. The response message includes information about at least one link, and the at least one link is a part or all of links indicated by the first indication information.

Based on the foregoing technical solution, in a scenario in which the first indication information may simultaneously indicate the link situations corresponding to all the sensing responders participating in sensing by proxy measurement, the sensing by proxy responder may indicate, by using the response message in response to the request message, link situations actually corresponding to the sensing responders participating in sensing by proxy measurement, so that the sensing by proxy initiator can learn of, based on the received response message, the link situations corresponding to the sensing responders participating in sensing by proxy measurement.

With reference to the first aspect, in some implementations of the first aspect, the response message includes a parameter indicating that the response message carries the information about the at least one link.

Based on the foregoing technical solution, to enable the sensing by proxy initiator to clearly learn of whether the response message carries information that is about at least one link and that indicates a link situation of the sensing responder participating in sensing by proxy measurement, the response message may carry the parameter, indicating that the response message carries the information about the at least one link, so that the sensing by proxy initiator can quickly determine, based on the parameter, whether the information about the at least one link exists. This improves a response message parsing rate.

With reference to the first aspect, in some implementations of the first aspect, the response message includes information about a first availability window, and the information about the first availability window includes information about an availability window corresponding to a first link; and the information about the availability window corresponding to the first link includes an identifier of the first link.

Based on the foregoing technical solution, the response message further includes information that is about the first availability window and that indicates an availability window corresponding to a link, so that the sensing by proxy initiator clearly learns of information about availability windows corresponding to different links based on the information about the first availability window, and performs sensing measurement or information transmission in an accurate availability window. This improves performance of sensing by proxy measurement.

With reference to the first aspect, in some implementations of the first aspect, the first indication information includes a first control field and one or both of a mandatory link indication field and a preferred link indication field, the first control field includes one or both of information about the mandatory link indication field and information about the preferred link indication field, the mandatory link indication field indicates a mandatory link for the first sensing responder, and the preferred link indication field indicates a preferred link for the first sensing responder.

Based on the foregoing technical solution, the first indication information includes a field indicating a mandatory link and/or a field indicating a preferred link, to indicate that a link situation corresponding to the first sensing responder may be mandatory and/or optional, thereby improving flexibility.

With reference to the first aspect, in some implementations of the first aspect, the first control field includes information indicating whether the first indication information carries the mandatory link indication field, and/or information indicating whether the first indication information carries the preferred link indication field.

Based on the foregoing technical solution, the first control field carries the information indicating whether the first indication information carries the mandatory link indication field, and/or the information indicating whether the first indication information carries the preferred link indication field, so that the sensing by proxy responder can quickly determine content of the first indication information based on the first control field. This improves a request message parsing rate.

With reference to the first aspect, in some implementations of the first aspect, the first control field includes information indicating a quantity of links corresponding to the first sensing responder.

With reference to the first aspect, in some implementations of the first aspect, the first control field and one or both of the mandatory link indication field and the preferred link indication field are carried in an SBP parameters element of the request message; or the first control field is carried in an SBP control parameter of the request message, and one or both of the mandatory link indication field and the preferred link indication field are carried in the SBP parameters element of the request message.

Based on the foregoing technical solution, the content of the first indication information may be carried in the SBP parameters element and/or the SBP control parameter. A specific transmission manner is not limited, provided that the first indication information is carried in the request message. There may be a plurality of possible structures of the request message. This improves flexibility of the solution.

With reference to the first aspect, in some implementations of the first aspect, the first indication information includes a second control field and one or both of a link identifier field and a mandatory indication field, the second control field includes information about the link identifier field and/or information about the mandatory indication field, the link identifier field indicates at least one link provided by a first station for the first sensing responder, and the mandatory indication indicates whether each of the at least one link is mandatory.

Based on the foregoing technical solution, the first indication information includes a field indicating a link and/or a field indicating whether the link is mandatory, to indicate that a link situation corresponding to the first sensing responder may be mandatory and/or optional, thereby improving flexibility.

With reference to the first aspect, in some implementations of the first aspect, the second control field includes information indicating whether the first indication information carries the link identifier field, and/or information indicating whether the first indication information carries the mandatory indication field.

Based on the foregoing technical solution, the second control field carries the information indicating whether the first indication information carries the link identifier field, and/or the information indicating whether the first indication information carries the mandatory indication field, so that the sensing by proxy responder can quickly determine content of the first indication information based on the second control field. This improves a request message parsing rate.

With reference to the first aspect, in some implementations of the first aspect, the second control field and one or both of the link identifier field and the mandatory indication field are carried in an SBP parameters element of the request message; or the second control field is carried in an SBP control parameter of the request message, and one or both of the link identifier field and the mandatory indication field are carried in the SBP parameters element of the request message.

Based on the foregoing technical solution, the content of the first indication information may be carried in the SBP parameters element and/or the SBP control parameter. A specific transmission manner is not limited, provided that the first indication information is carried in the request message. There may be a plurality of possible structures of the request message. This improves flexibility of the solution.

With reference to the first aspect, in some implementations of the first aspect, the request message further includes information about a second availability window, and the information about the second availability window includes information about an availability window corresponding to a second link; and the information about the availability window corresponding to the second link includes an identifier of the second link.

Based on the foregoing technical solution, the request message further includes information that is about the second availability window and that indicates an availability window corresponding to a link, so that the sensing by proxy responder clearly learns of information about availability windows corresponding to different links based on the information about the second availability window, and performs sensing measurement or information transmission in an accurate availability window. This improves performance of sensing by proxy measurement.

According to a second aspect, a communication method is provided. The method may be performed by a second MLD, or may be performed by a circuit configured in the second MLD. This is not limited in this application. The second MLD may be an AP or a non-AP. For ease of description, the following provides descriptions by using an example in which the second MLD performs the method.

The communication method includes: The second multi-link device MLD receives a request message from a first MLD. The request message is used to request to set up sensing by proxy SBP measurement, the request message includes first indication information, and the first indication information indicates a link onto which a first sensing responder is mapped. The second MLD parses the request message.

With reference to the second aspect, in some implementations of the second aspect, the request message includes information about at least one sensing responder and at least one piece of first indication information respectively corresponding to the at least one sensing responder, the first sensing responder is any one of the at least one sensing responder, and the first indication information is first indication information corresponding to the first sensing responder in the at least one piece of first indication information.

With reference to the second aspect, in some implementations of the second aspect, the method further includes: The second MLD determines, based on the at least one piece of first indication information, a sensing responder participating in the SBP in the at least one sensing responder and a link onto which each of the sensing responder participating in the SBP is mapped. The second MLD sends a response message to the first MLD. The response message includes information about the sensing responder participating in the SBP measurement and second indication information, and the second indication information indicates a link onto which the sensing responder participating in the SBP measurement is mapped.

With reference to the second aspect, in some implementations of the second aspect, the response message includes a parameter indicating that the response message carries the second indication information.

With reference to the second aspect, in some implementations of the second aspect, the response message includes information about a first availability window, and the information about the first availability window includes information about an availability window corresponding to a first link; and the information about the availability window corresponding to the first link includes an identifier of the first link.

With reference to the second aspect, in some implementations of the second aspect, the first indication information further indicates a link onto which a sensing responder participating in the SBP measurement other than the first responder is mapped, and the first sensing responder is any one of a sensing responder participating in the SBP measurement.

With reference to the second aspect, in some implementations of the second aspect, the method further includes: The second MLD determines, based on the first indication information, at least one link corresponding to the sensing responder participating in the SBP. The second MLD sends a response message to the first MLD. The response message includes information about the at least one link, and the at least one link is a part or all of links indicated by the first indication information.

With reference to the second aspect, in some implementations of the second aspect, the first indication information includes a first control field and one or both of a mandatory link indication field and a preferred link indication field, the first control field includes one or both of information about the mandatory link indication field and information about the preferred link indication field, the mandatory link indication field indicates a mandatory link for the first sensing responder, and the preferred link indication field indicates a preferred link for the first sensing responder.

With reference to the second aspect, in some implementations of the second aspect, the first control field includes information indicating whether the first indication information carries the mandatory link indication field, and/or information indicating whether the first indication information carries the preferred link indication field.

With reference to the second aspect, in some implementations of the second aspect, the first control field and one or both of the mandatory link indication field and the preferred link indication field are carried in an SBP parameters element of the request message; or the first control field is carried in an SBP control parameter of the request message, and one or both of the mandatory link indication field and the preferred link indication field are carried in the SBP parameters element of the request message.

With reference to the second aspect, in some implementations of the second aspect, the first indication information includes a second control field and one or both of a link identifier field and a mandatory indication field, the second control field includes information about the link identifier field and/or information about the mandatory indication field, the link identifier field indicates at least one link provided by a first station for the first sensing responder, and the mandatory indication indicates whether each of the at least one link is mandatory.

With reference to the second aspect, in some implementations of the second aspect, the second control field includes information indicating whether the first indication information carries the link identifier field, and/or information indicating whether the first indication information carries the mandatory indication field.

With reference to the second aspect, in some implementations of the second aspect, the second control field and one or both of the link identifier field and the mandatory indication field are carried in an SBP parameters element of the request message; or the second control field is carried in an SBP control parameter of the request message, and one or both of the link identifier field and the mandatory indication field are carried in the SBP parameters element of the request message.

With reference to the second aspect, in some implementations of the second aspect, the request message further includes information about a second availability window, and the information about the second availability window includes information about an availability window corresponding to a second link; and the information about the availability window corresponding to the second link includes an identifier of the second link.

For technical effects of the method shown in the second aspect and the possible designs of the second aspect, refer to the technical effects in the first aspect and the possible designs of the first aspect.

According to a third aspect, a communication apparatus is provided. The apparatus is configured to perform the method provided in the first aspect. Specifically, the apparatus may include a unit and/or a module configured to perform the method according to any one of the implementations of the first aspect, for example, a processing unit and/or a communication unit.

For example, when the communication apparatus is the first MLD in the first aspect, the processing unit is configured to generate a request message. The request message is used to request to set up sensing by proxy SBP measurement, the request message includes first indication information, and the first indication information indicates a link onto which a first sensing responder is mapped. The communication unit is configured to send the request message to a second MLD.

In an implementation, the communication unit may be a transceiver or an input/output interface, and the processing unit may be at least one processor. Optionally, the transceiver may be a transceiver circuit. Optionally, the input/output interface may be an input/output circuit.

For example, when the communication apparatus is the first MLD in the first aspect, the processor is configured to generate a request message. The request message is used to request to set up sensing by proxy SBP measurement, the request message includes first indication information, and the first indication information indicates a link onto which a first sensing responder is mapped. The transceiver is configured to send the request message to a second MLD.

In another implementation, the apparatus is a chip, a chip system, or a circuit used in a first MLD. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a fourth aspect, a communication apparatus is provided. The apparatus is configured to perform the method provided in the second aspect. Specifically, the apparatus may include a unit and/or a module configured to perform the method according to any one of the implementations of the second aspect, for example, a processing unit and/or a communication unit.

For example, when the communication apparatus is the second MLD in the second aspect, the communication unit is configured to receive a request message from a first MLD. The request message is used to request to set up sensing by proxy SBP measurement, the request message includes first indication information, and the first indication information indicates a link onto which a first sensing responder is mapped. The processing unit is configured to parse the request message.

In an implementation, the communication unit may be a transceiver or an input/output interface, and the processing unit may be at least one processor. Optionally, the transceiver may be a transceiver circuit. Optionally, the input/output interface may be an input/output circuit.

For example, when the communication apparatus is the second MLD in the second aspect, the transceiver is configured to receive a request message from a first MLD. The request message is used to request to set up sensing by proxy SBP measurement, the request message includes first indication information, and the first indication information indicates a link onto which a first sensing responder is mapped. The processor is configured to parse the request message.

In another implementation, the apparatus is a chip, a chip system, or a circuit used in a second MLD. When the apparatus is the chip, the chip system, or the circuit used in the network device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a fifth aspect, a communication apparatus is provided. The apparatus includes: a memory, configured to store a program; and at least one processor, configured to execute a computer program or instructions stored in the memory, to perform the method according to any one of the foregoing implementations of the first aspect or the second aspect, or any one of the second aspect or the foregoing implementations of the second aspect.

According to a sixth aspect, this application provides a processor, configured to perform the methods according to the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a seventh aspect, a computer-readable storage medium is provided. The computer-readable medium stores program code executed by a device, and the program code includes instructions for performing the method according to any one of the foregoing implementations of the first aspect or the second aspect.

According to an eighth aspect, a computer program product including instructions is provided. When the computer program product is run on a computer, the computer is caused to perform the method according to any one of the foregoing implementations of the first aspect or the second aspect.

According to a ninth aspect, a chip is provided. The chip includes a processor and a communication interface. The processor reads, through the communication interface, instructions stored in a memory, to perform the method according to any one of the foregoing implementations of the first aspect or the second aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the implementations.

According to a tenth aspect, a communication system is provided, including the first MLD in the first aspect and the second MLD in the second aspect.

### BRIEF DESCRIPTION OF DRAWINGS

FIG. 1 is a diagram of an application scenario to which an embodiment of this application is applicable;
FIG. 2 is a diagram of a structure of an apparatus according to an embodiment of this application;
FIG. 3 is a diagram of a structure of a multi-link device according to an embodiment of this application;
FIG. 4 is a diagram of a structure of a plurality of links between multi-link devices according to an embodiment of this application;
FIG. 5 is a schematic flowchart of sensing by proxy measurement;
FIG. 6 is a diagram of a frame structure of an SBP request frame;
FIG. 7 is a diagram of a frame structure of an SBP response frame;
FIG. 8 is a diagram of an availability window;
FIG. 9 is a schematic flowchart of a communication method according to an embodiment of this application;
FIG. 10 is a diagram of an SBP parameters element according to an embodiment of this application;
FIG. 11 is a diagram of a relationship between a sensing responder address and a link mapping indication according to an embodiment of this application;
FIG. 12(a) to FIG. 12(c) are diagrams of structures of a type of first indication information according to an embodiment of this application;
FIG. 13(a) and FIG. 13(b) are diagrams of structures of another type of first indication information according to an embodiment of this application;
FIG. 14 is another diagram of carrying first indication information according to an embodiment of this application;
FIG. 15A and FIG. 15B are still another diagram of carrying first indication information according to an embodiment of this application;
FIG. 16A and FIG. 16B are still another diagram of carrying first indication information according to an embodiment of this application;
FIG. 17 is still another diagram of carrying first indication information according to an embodiment of this application;
FIG. 18 is still another diagram of carrying first indication information according to an embodiment of this application;
FIG. 19A and FIG. 19B are still another diagram of carrying first indication information according to an embodiment of this application;
FIG. 20A and FIG. 20B are still another diagram of carrying first indication information according to an embodiment of this application;
FIG. 21 is a diagram of an ISTA availability window information field according to an embodiment of this application;
FIG. 22 is a diagram of an RSTA availability window information field according to an embodiment of this application;
FIG. 23 is a diagram of a structure of a sensing measurement request frame according to an embodiment of this application;
FIG. 24 is a block diagram of a communication apparatus according to an embodiment of this application;
FIG. 25 is a diagram of another communication apparatus according to an embodiment of this application; and
FIG. 26 is a diagram of a chip system according to an embodiment of this application.

### DESCRIPTION OF EMBODIMENTS

For ease of understanding embodiments of this application, the following descriptions are provided first.

First, in this application, "indicate" may include "directly indicate" and "indirectly indicate". When a piece of indication information indicates A, the indication information may directly indicate A or indirectly indicate A, but it does not indicate that the indication information definitely carries A.

Information indicated by indication information is referred to as to-be-indicated information. In a specific implementation process, there are a plurality of manners of indicating the to-be-indicated information, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

Second, "at least one" shown in this application means one or more, and "a plurality of" means two or more. In addition, in embodiments of this application, "first", "second", and various numeric numbers (for example, "#1" and "#2") are merely used for distinguishing for ease of description, and are not used to limit the scope of embodiments of this application. Sequence numbers in the following processes do not mean an execution sequence. The execution sequence of the processes should be determined based on functions and internal logic of the processes, and should not constitute any limitation on implementation processes of embodiments of this application. It should be understood that objects described in this way may be interchangeable in proper cases, so that solutions other than embodiments of this application can be described. In addition, in embodiments of this application, the word like "S910" is merely an identifier for ease of description, and do not limit a sequence of performing steps.

Third, in embodiments of this application, terms such as "example" or "for example" are used to give an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

Fourth, "store" in embodiments of this application may be "stored in one or more memories". The one or more memories may be separately disposed, or may be integrated into an encoder, a decoder, a processor, or a communication apparatus. Alternatively, some of the one or more memories may be separately disposed, and some may be integrated into a decoder, a processor, or a communication apparatus. A type of the memory may be a storage medium in any form. This is not limited in this application.

Fifth, in embodiments of this application, a "protocol" may be a standard protocol in the communication field, for example, may include an NR protocol and a related protocol applied to a further communication system. This is not limited in this application.

Sixth, in embodiments of this application, terms "of (of)", "corresponding (corresponding, relevant)", "corresponding (corresponding)", and "associate (associate)" may be interchangeably used sometimes. It should be noted that meanings expressed by the terms are consistent when differences are not emphasized.

Seventh, in embodiments of this application, "in a case of", "when", and "if" may be used interchangeably sometimes. It should be noted that, when a difference between the terms is not emphasized, meanings to be expressed are consistent.

Eighth, a term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

Ninth, in some of accompanying drawings related to a message structure in embodiments of this application, an example of a length of a field in a message is provided. It should be understood that a length of a byte shown in the accompanying drawings in embodiments of this application is merely an example. In actual applications, a length of any byte may change.

Tenth, in some of accompanying drawings related to a message structure in embodiments of this application, an example of a name of a field in a message is provided. It should be understood that the name of the field shown in the accompanying drawings in embodiments of this application is merely an example. In actual applications, a name of any field may change.

Eleventh, in some of accompanying drawings related to a message structure in embodiments of this application, a length of a field in a message is 0 or variable (variable), indicating that the field is an optional field. In other words, when the message does not include the field, the length of the field is 0. If the length of the field is variable (variable), it indicates that the length of the field is uncertain. In an actual design process, other indication information may indicate a specific length of the field, or a receiver and a transmitter may negotiate the length of the field in advance, or the length of the field is predefined, or when receiving the message that carries the field, a receiver can determine the length of the field based on other auxiliary information and parse the message. A manner of determining a specific length of a variable-length field is not limited in this application. For details, refer to descriptions of a length of a variable field in an SBP request frame in a current related technology. Details are not described herein again. The following does not repeatedly describe the length of the variable-length field involved in the message.

The following describes technical solutions of this application with reference to accompanying drawings.

The technical solutions provided in embodiments of this application may be applied to a wireless local area network (wireless local area network, WLAN) scenario, for example, support related institute of electrical and electronics engineers (institute of electrical and electronics engineers, IEEE) 802.11 standard such as an 802.11a/b/g standard, an 802.11n standard, an 802.11ac standard, an 802.11ax standard, and an 802.11be standard (Wi-Fi 7), also referred to as extremely high throughput (extremely high throughput, EHT), an 802.11bn standard (Wi-Fi 8), or a next-generation standard of Wi-Fi 8, further including standards such as 802.11ad and 802.11ay; may be further applied to an ultra-wideband (ultra-wideband, UWB)-based wireless personal area network system, for example, 802.15 series standards; and may be further applied to a sensing (sensing) system, for example, 802.11bf series standards. The 802.11n standard is referred to as high throughput (high throughput, HT), the 802.11ac standard is referred to as a very high throughput (very high throughput, VHT) standard, the 802.11ax standard is referred to as a high efficiency (high efficiency, HE) standard, and the 802.11be standard is referred to as an extremely high throughput (extremely high throughput, EHT) standard. 802.11bf includes two major categories of standards: a low-frequency (for example, sub-7 GHz) standard and a high-frequency (for example, 60 GHz) standard. An implementation of sub-7 GHz mainly depends on 802.11ac, 802.11ax, 802.11be, and a next-generation standard. An implementation of 60 GHz mainly depends on 802.11ad, 802.11ay, and a next-generation standard. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

Although embodiments of this application are mainly described by using an example in which a WLAN network is deployed, especially a network to which the IEEE 802.11 system standards are applied, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of a used coverage area and a used wireless access protocol, the various aspects provided in embodiments of this application are applicable to any appropriate wireless network.

The technical solutions in embodiments of this application may be further applied to various communication systems such as a WLAN communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, a future communication system, an internet of things (internet of things, IoT), and a vehicle-to-everything (vehicle-to-x, V2X).

The foregoing communication systems to which this application is applicable are merely examples for description, and the communication systems to which this application is applicable are not limited thereto. Unified descriptions are provided herein, and are not described below again.

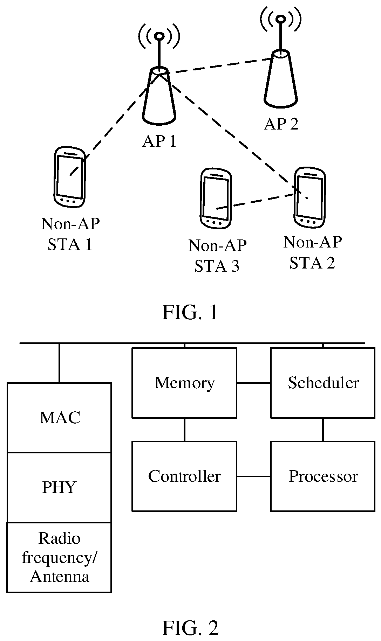

FIG. 1 is a diagram of an application scenario to which an embodiment of this application is applicable. As shown in FIG. 1, a communication method provided in this application is applicable to data communication between an access point (access point, AP) (an AP 1 and an AP 2 shown in FIG. 1) and a station (station, STA) (a non-AP STA 1, a non-AP STA 2, and a non-AP STA 3 shown in FIG. 1). The station may be a non-access point station (non-access point station, non-AP STA), which is referred to as a non-AP station or STA for short, and the AP may be referred to as an access station. Specifically, the solutions of this application are applicable to data communication between an AP and one or more non-AP stations (for example, data communication between an AP 1 and each of a non-AP STA 1 and a non-AP STA 2), and are also applicable to data communication between APs (for example, data communication between the AP 1 and an AP 2) and data communication between non-AP STAs (for example, data communication between the non-AP STA 2 and a non-AP STA 3).

The access point may be a node through which a terminal (for example, a mobile phone) accesses a wired (or wireless) network, and is mainly deployed at home, in a building, or on a campus, with a typical coverage radius ranging from tens of meters to more than 100 meters, or certainly, may be deployed outdoors. The access point is equivalent to a bridge that connects a wired network and a wireless network, and is mainly used to connect various wireless network clients together and then connect the wireless network to the Ethernet.

Specifically, the access point may be a terminal or a network device with a Wi-Fi chip. The network device may be a server, a router, a switch, a bridge, a computer, a mobile phone, a relay station, a vehicle-mounted device, a wearable device, a network device in a 5G network, a network device in a future communication system network, a network device in a public land mobile network (public land mobile network, PLMN), or the like. This is not limited in this embodiment of this application. The access point may be a device that supports a Wi-Fi standard. For example, the access point may alternatively support one or more of the following IEEE 802.11 series standards: 802.11a, 802.11b, 802.11g, 802.11n, 802.11ac, 802.11ax, 802.11be, 802.11ad, and 802.11ay.

The non-AP station may be a wireless communication chip, a wireless sensor, a wireless communication terminal, or the like, and may also be referred to as a user, user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The non-AP station may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, an internet of things device, a wearable device, a terminal device in a 5G network, a terminal device in a future communication system network, a terminal device in a PLMN, or the like. This is not limited in this embodiment of this application. The non-AP station may be a device that supports a WLAN standard. For example, the non-AP station may support one or more of the following IEEE 802.11 series standards: 802.11a, 802.11b, 802.11g, 802.11n, 802.11ac, 802.11ax, 802.11be, 802.11ad, and 802.11ay.

For example, the non-AP station may be a mobile phone, a tablet computer, a set-top box, a smart television, a smart wearable device, a vehicle-mounted communication device, a computer, an internet of things (internet of things, IoT) node, a sensor, smart home, for example, a smart camera, a smart remote control, a smart water meter, or a sensor in smart city.

The AP or the non-AP station may include a transmitter, a receiver, a memory, a processor, and the like. The transmitter and the receiver are respectively configured to send and receive packet structures. The memory is configured to store signaling information, store a preset value that is pre-agreed-upon, and the like. The processor is configured to parse the signaling information, process related data, and the like.

For example, FIG. 2 shows a communication apparatus according to this application. The apparatus shown in FIG. 2 may be an AP or a non-AP station. A medium access control (medium access control, MAC) layer processing module, a physical (physical, PHY) layer processing module, radio frequency/an antenna, and the like are configured to implement related functions of the foregoing transmitter and receiver. As shown in FIG. 2, in addition to the MAC layer processing module, the PHY layer processing module, the radio frequency/antenna, a memory, and a processor, the apparatus may further include a controller and a scheduler.

It should be understood that FIG. 2 shows merely an example of an apparatus according to this application, and does not constitute a limitation on this application. For example, the apparatus may alternatively not include the controller and/or the scheduler.

For ease of understanding of the technical solutions in embodiments of this application, some terms or concepts that may be used in embodiments of this application are first briefly described.

1. Multi-link device (multi-link device, MLD): In embodiments of this application, a next-generation IEEE 802.11 standard device that simultaneously supports a plurality of links is referred to as a multi-link device.

For example, the multi-link device may be an access point multi-link device (access point MLD, AP MLD), or may be a non-access point MLD (non-AP MLD), for example, a station multi-link device (station MLD, STA MLD). It should be noted that the foregoing names of the multi-link device are merely examples, and do not constitute any limitation on the protection scope of this application. For example, the AP MLD may also be referred to as a multi-link AP. Alternatively, with development of a communication technology, the AP MLD may have other names. Examples are not enumerated for description herein.

In the IEEE 802.11be protocol, the MLD supports a multi-link operation technology. If receiving and sending may be separately performed on different links at a same time period (for example, the multi-link device includes two links; and in a same time period, one link may be used to send a signal, and the other link may be used to receive a signal), this mode is referred to as a simultaneously transmitting and receiving (simultaneously transmitting and receiving, STR) mode. If only receiving or sending can be performed on different links simultaneously (for example, the multi-link device includes two links, and the two links can only be used to send a signal in a same time period, or the two links can only be used to receive a signal in a same time period), the mode is referred to as a non-simultaneously transmitting and receiving (Non-simultaneously transmitting and receiving, NSTR) mode. The solutions provided in embodiments of this application are applicable to the STR mode, and are also applicable to the NSTR mode.

The MLD has a plurality of radio frequency modules, and may operate on different frequency bands. For example, a frequency band on which the MLD operates may be, for example, all or a part of 2.4 GHz, 5 GHz, 6 GHz, or high-frequency 60 GHz. The MLD may include an AP MLD and/or a non-access point (non-AP) MLD. For example, the non-AP MLD may be a STA MLD.

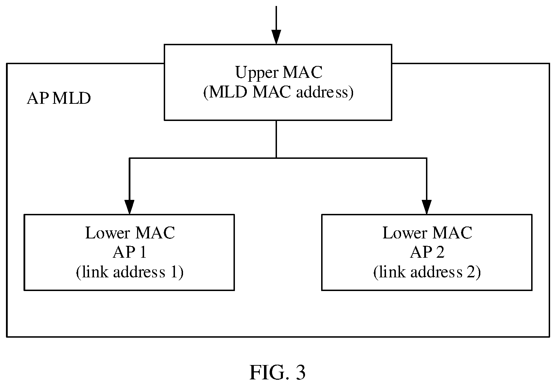

The AP MLD is used as an example. The AP MLD may include one or more affiliated (affiliated) stations, and each affiliated station has a respective medium access control (medium access control, MAC) address (address). FIG. 3 is an example of a diagram of a structure of a multi-link device according to an embodiment of this application. As shown in FIG. 3, the affiliated station of the AP MLD includes an AP 1 and an AP 2, a lower (low) MAC address of the AP 1 is a link address 1, and a lower MAC address of the AP 2 is a link address 2. In addition, the AP MLD has an upper (upper) MAC address, which is referred to as an MLD MAC address.

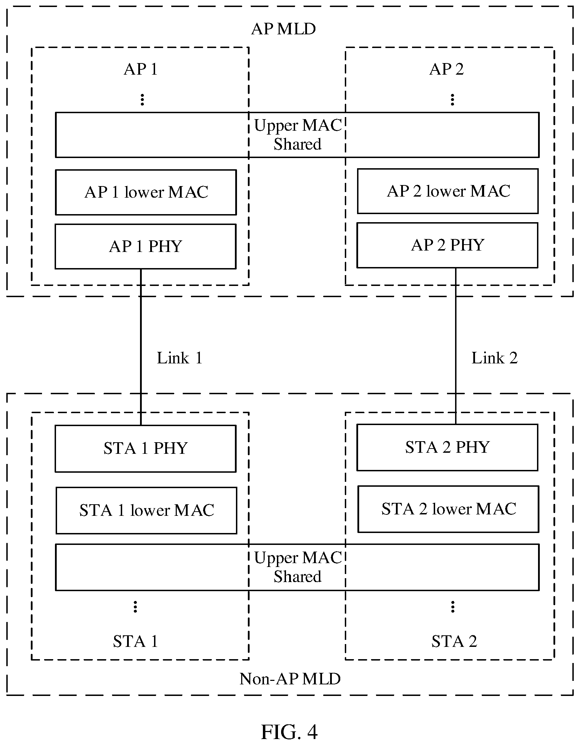

The AP MLD and the non-AP MLD may exchange signaling on any link, to set up a multi-link connection. FIG. 4 is an example of a diagram of a structure of a plurality of links between multi-link devices according to an embodiment of this application. As shown in FIG. 4, the AP MLD includes the AP 1 and the AP 2. The AP 1 includes an AP 1 PHY, AP 1 lower MAC, and upper MAC. The AP 2 includes an AP 2 PHY, AP 2 lower MAC, and the upper MAC. The AP 1 and the AP 2 share the upper MAC. The non-AP MLD includes a STA 1 and a STA 2. The STA 1 includes a STA 1 PHY, STA 1 lower MAC, and upper MAC. The STA 2 includes a STA 2 PHY, STA 2 lower MAC, and the upper MAC. The STA 1 and the STA 2 share the upper MAC, the AP 1 and the STA 1 are connected through a link 1, and the AP 2 and the STA 2 are connected through a link 2.

In a possible implementation, when the plurality of links are set up, an association between the non-AP MLD and the AP MLD may be set up in an association process. For example, the association process may include: The non-AP MLD sends an association request (association request) frame on the link 1. The association request frame carries STA-side information of the link 1 and STA-side information of the link 2. For example, the association request frame may carry a multi-link element (multi-link element) field, and the multi-link element field is used to carry information about the non-AP MLD and information about a station in the non-AP MLD. The AP MLD sends an association response (association response) frame on the link 1. The association response frame carries AP-side information of the link 1, and further carries AP-side information of the link 2. In this way, the STA 1 and the STA 2 of the non-AP MLD respectively set up an association with the AP 1 and the AP 2 of the AP MLD.

2. Sensing (sensing) technology: A signal sent by a Wi-Fi device is usually received by a terminal device only after being reflected, diffracted, and scattered by various obstacles. Consequently, an actually received signal is usually obtained by superimposing a plurality of paths of signals. In other words, a channel environment may become complex, but this also brings convenience for sensing, through a radio signal, a physical environment that the radio signal passes through. A surrounding environment can be inferred and sensed by analyzing the radio signal, for example, channel state information (channel state information, CSI), affected by the various obstacles. Therefore, a sensing technology is derived accordingly.

This application mainly relates to a sensing by proxy (agent) (sensing by proxy, SBP) technology. In a scenario in which an AP separately sets up a sensing relationship with at least two non-AP STAs, sensing measurement may be performed in an SBP procedure. For example, in the diagram shown in FIG. 1, a non-AP STA 1 and a non-AP STA 2 may separately or simultaneously perform a sensing process with an AP 1. The non-AP STA 1 may send a sensing by proxy request to the AP 1, to request the AP to serve as a proxy of the non-AP STA 1 to obtain a sensing result obtained by the AP 1 and the non-AP STA 2 in the sensing process (or request the AP 1 to obtain a sensing result of the non-AP STA 2).

It should be understood that the non-AP STA 1 is a requesting STA (requesting STA) or a sensing by proxy requesting station (sensing by proxy requesting STA, SBP requesting STA), and the non-AP STA 1 requests the AP 1 to serve as a proxy of the non-AP STA 1 to obtain a sensing result of another station.

When the AP becomes a proxy of the non-AP STA 1, the non-AP STA 1 may obtain the sensing result of the another sensing station through the AP, for example, obtain a sensing result of the non-AP STA 2 and/or a sensing result of a non-AP STA 3 through the AP.

The sensing by proxy technology includes six roles and three steps. The six roles are a sensing by proxy initiator (SBP initiator), a sensing by proxy responder (SBP responder), a sensing initiator (sensing initiator), a sensing responder (sensing responder), a sensing transmitter (sensing transmitter), and a sensing receiver (sensing receiver). The three steps are SBP setup exchange (SBP setup exchange), SBP reporting (SBP reporting), and SBP termination (SBP termination). It should be understood that each of the six roles may be implemented by a STA or an AP, provided that a function of the corresponding role can be implemented. This is not limited in this application. For example, the SBP initiator may be an AP or a STA.

Specifically, the sensing initiator is a station that initiates a sensing process; the sensing responder is a station participating in the sensing process initiated by the sensing initiator; the sensing transmitter is a station that sends a physical layer protocol data unit (physical layer protocol data unit, PPDU) for sensing measurement in the sensing process; and the sensing receiver is a station that receives the PPDU sent by the sensing transmitter and that performs sensing measurement in the sensing process. The sensing by proxy initiator is a station that requests the sensing by proxy responder to initiate a sensing behavior on behalf of sensing by proxy initiator. The sensing by proxy responder is a station (for example, the AP 1) that initiates the sensing behavior on behalf of the sensing by proxy initiator. The sensing by proxy responder is also the sensing initiator.

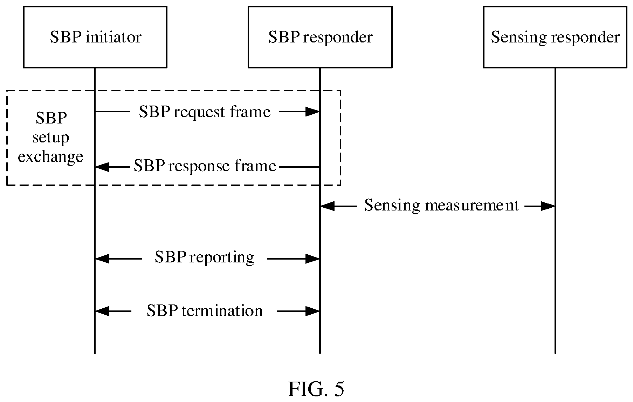

3. SBP setup exchange procedure: Currently, an SBP technology includes three steps: SBP setup exchange, SBP reporting, and SBP termination. FIG. 5 is a schematic flowchart of sensing by proxy measurement. A sensing measurement phase is a WLAN sensing procedure. The sensing measurement phase includes sensing measurement setup (sensing measurement session) and sensing measurement exchange (sensing measurement exchange). Sensing measurement setup and SBP setup exchange are independent of each other, and a time sequence is not limited. For example, before a sensing by proxy initiator initiates an SBP setup request to a sensing by proxy responder, the sensing by proxy responder has performed sensing measurement setup with at least one sensing responder, so that after receiving the SBP setup request of the sensing by proxy initiator, the sensing by proxy responder can provide a sensing measurement result of the corresponding sensing by proxy responder for the sensing by proxy initiator in a timely manner. For another example, a sensing by proxy responder performs sensing measurement setup with at least one sensing responder only after a sensing by proxy initiator initiates an SBP setup request to the sensing by proxy responder. For still another example, a sensing by proxy responder may simultaneously perform SBP setup with a sensing by proxy initiator, and performs sensing measurement setup with at least one sensing responder.

This application mainly relates to an improvement in SBP setup exchange steps. Specifically, SBP setup exchange defined in a current protocol includes:
(1) The SBP initiator sends an SBP request frame (SBP request frame) to the SBP responder. The SBP request frame includes an SBP parameters element (SBP Parameters element). The SBP parameters element indicates a quantity of sensing responders. The SBP parameters element is optional. The SBP request frame may further include a sensing measurement parameters element (Sensing Measurement Parameters element) and an initiating station (Initiating Station, ISTA) availability window element (Availability Window element).
(2) The SBP responder sends an SBP response frame (SBP response frame) to the SBP initiator. The SBP response frame indicates whether to accept a parameter requested by the SBP request frame, and carries a response station (response Station, RSTA) availability window element allocated to the SBP initiator for receiving a report and participating in sensing (if any).

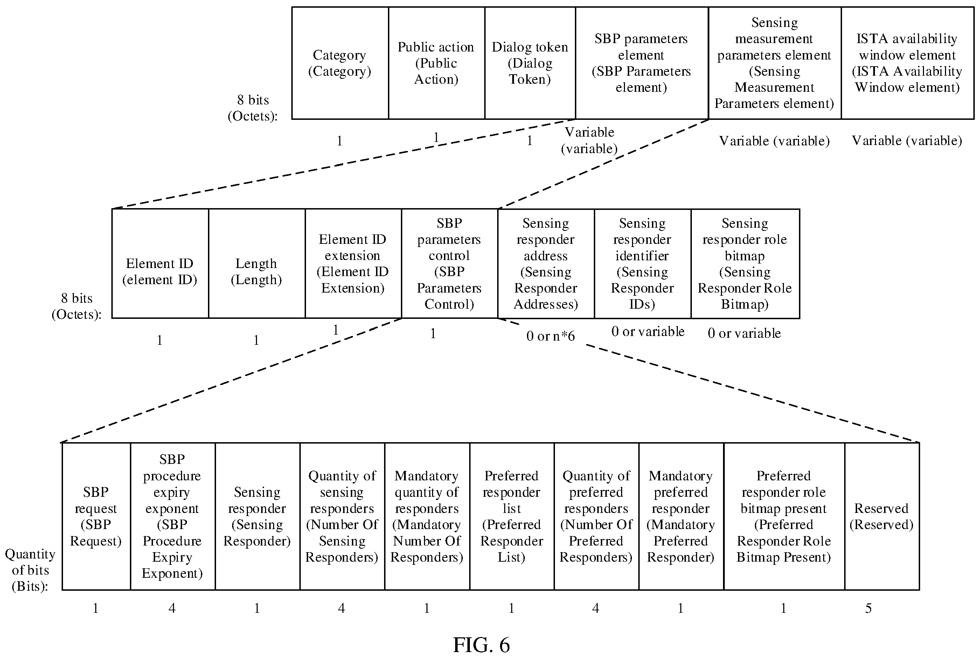

For ease of understanding, the SBP request frame is described in detail with reference to FIG. 6. FIG. 6 is a diagram of a frame structure of an SBP request frame. It can be learned from FIG. 6 that the SBP request frame includes the following fields:
category (Category), public action (Public Action) (or referred to as protected dual of public action (Protected Dual of Public Action)), dialog token (Dialog Token), SBP parameters element, sensing measurement parameters element, and ISTA availability window element. The SBP parameters element, the sensing measurement parameter, and the ISTA availability window element are optional.

The category field in embodiments of this application may indicate a type of a message. The public action field in embodiments of this application may indicate a function of the message. The dialog token in embodiments of this application may be used to identify a dialog. For example, a pair of request (request) and response (response) that correspond to each other may have a same dialog token. The ISTA availability window element indicates an occasion at which the SBP initiator may perform sensing measurement or receive a measurement report.

The SBP parameters element may include the following fields:
element identifier (element ID), length (Length), element identifier extension (element ID Extension), SBP parameters control (SBP Parameters Control), sensing responder address (Sensing Responder Addresses), sensing responder identifier (Sensing Responder IDs), or sensing responder role bitmap (Sensing Responder Role Bitmap). The bitmap (Bitmap) may also be referred to as a bit map. In this application, the bitmap may be understood as an identifier bitmap (ID Bitmap). In other words, an identifier is represented by using a bitmap. For example, the sensing responder role bitmap may be understood as an identifier of a sensing responder role.

In addition, the identifier in this application may alternatively be represented in another manner, for example, information such as an identifier list (ID list) or address information (for example, a MAC address) that may identify a corresponding object. A specific form of the identifier is not limited in this application.

The SBP parameters control field includes the following fields:
SBP request (SBP Request), SBP procedure expiry exponent (SBP Procedure Expiry Exponent), sensing responder (Sensing Responder), quantity of sensing responders (Number of Sensing Responders), mandatory quantity of responders (Mandatory Number of Responders), preferred responder list (Preferred Responder list), quantity of preferred responders (Number of Preferred Responders), mandatory preferred responder (Mandatory Preferred Responder), preferred responder role bitmap present (Preferred Responder Role Bitmap Present), and reserved (Reserved).

A value carried in the sensing responder in the SBP parameters field may indicate whether a device requesting sensing by proxy this time serves as the sensing responder to participate in a subsequent sensing process to perform sensing receiving/sending.

A value carried in the quantity of sensing responders may indicate a quantity of sensing responders requesting sensing by proxy this time. The mandatory quantity of responders may indicate information (namely, a value that needs to be indicated by the quantity of sensing responders field is used as the quantity of sensing responders) that needs to be satisfied by the quantity of sensing responders field, or information indicating that the quantity of sensing responders field is a recommended value (that is, a value indicated by the quantity of sensing responders field is not necessarily satisfied, and may not be satisfied (or understood as that the value does not need to be satisfied)). In this way, when the quantity of sensing responders needs to be satisfied, it may be clearly specified, thereby improving accuracy of a solution execution process. When the quantity of sensing responders is not necessarily satisfied, it is clearly specified, thereby improving flexibility of the solution.

A value carried in the preferred responder list may indicate whether an identifier of the sensing responder is present in the message. A value carried in a mandatory responder list may indicate that an address of a sensing responder that is present in the message needs to be satisfied (that is, it is necessary to use a sensing responder indicated by the preferred responder list) or indicate that an address of a sensing responder that is present in the message does not necessarily need to be satisfied (that is, the address of the sensing responder that is present in the message is a recommended value, or may not be satisfied (or understood as that the address does not need to be satisfied)).

A value carried in the sensing responder address may indicate an identifier of the sensing responder requesting sensing by proxy this time. The value carried in the sensing responder address may alternatively be a MAC address of the sensing responder and/or a link MAC address with which the SBP initiator wants to set up sensing. Address information that is of at least one target apparatus and that is further included in a message used to request sensing by proxy may be considered as a sensing responder address, the target apparatus may be considered as the sensing responder address, the target apparatus may be considered as the sensing responder, and the target apparatus in the at least one target apparatus is an apparatus performing sensing measurement.

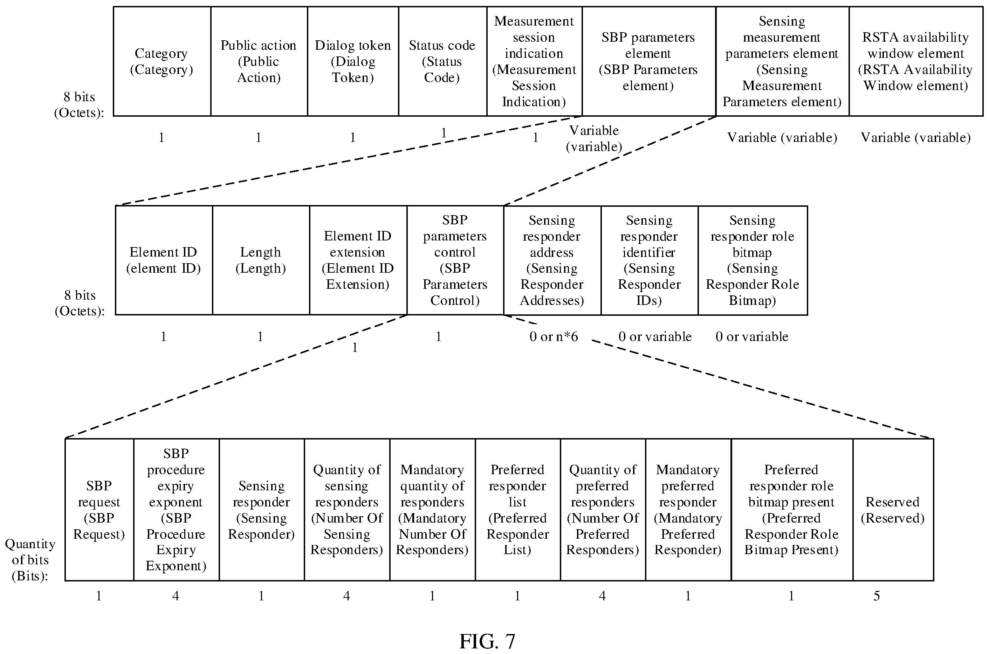

For ease of understanding, the SBP response frame is described in detail with reference to FIG. 7. FIG. 7 is a diagram of a frame structure of an SBP response frame. It can be learned from FIG. 7 that the SBP response frame includes the following fields:
category (Category), public action (Public Action), dialog token (Dialog Token), status code (Status Code), measurement session indication (Measurement Session Indication), SBP parameters element, sensing measurement parameters element, and RSTA availability window element. The SBP parameters element, the sensing measurement parameter, and the response station (response Station, RSTA) availability window element in the response frame are optional.

For example, if the status code in the SBP response frame is set to success (SUCCESS) or rejected with suggested changes (REJECTED_WITH_SUGGESTED_CHANGES), the SBP parameters element exists; or if the status code in the SBP response frame is not set to success or rejected with suggested changes, the SBP parameters element does not exist.

For another example, if the status code in the SBP response frame is set to REJECTED_WITH_SUGGESTED_CHANGES, the sensing measurement parameter exists; or if the status code in the SBP response frame is not set to REJECTED_WITH_SUGGESTED_CHANGES, the sensing measurement parameter does not exist.

For still another example, if the status code in the SBP response frame is set to SUCCESS, RSTA availability window (RSTA Availability Window element) exists. If the status code in the SBP response frame is set to REJECTED_WITH_SUGGESTED_CHANGES, RSTA availability window may exist; or if the status code in the SBP response frame is not set to REJECTED_WITH_SUGGESTED_CHANGES, RSTA availability window does not exist.

6. Sensing measurement setup procedure: A sensing initiator sends a sensing measurement request frame (Sensing Measurement Request Frame) to a sensing responder to initiate sensing measurement setup and set a sensing measurement parameter (Sensing Measurement Parameters), a sensing type (TB/non-TB/SBP), and a corresponding parameter.

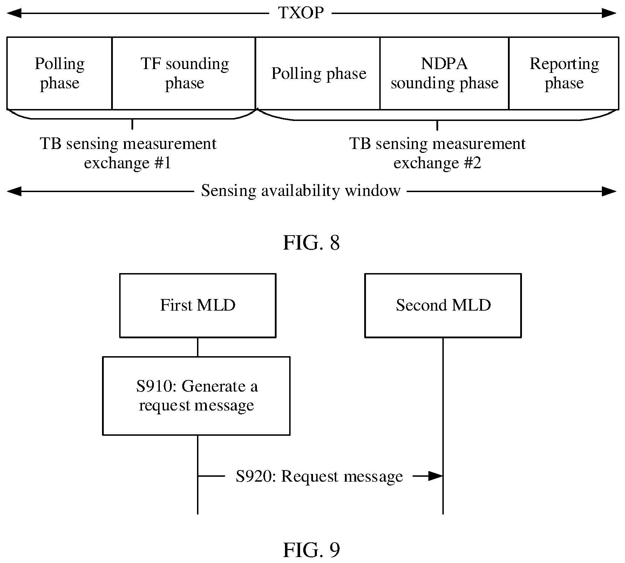

7. Sensing availability window technology: The sensing availability window (Sensing Availability window) technology is applied in the IEEE 802.11bf protocol. A sensing availability window is a pre-arranged periodic time window allocated by an AP to a non-AP. All TB sensing measurement exchange is performed in the sensing availability time window. FIG. 8 shows that one availability window includes two pieces of TB sensing measurement exchange (TB sensing measurement exchange #1 and TB sensing measurement exchange #2 shown in FIG. 8).

It can be learned from FIG. 8 that, one transmission opportunity (Transmission Opportunity, TXOP) includes a polling phase (polling phase), a TF sounding phase (TF sounding phase), a polling phase (polling phase), an NDPA sounding phase (NDPA sounding phase), and a reporting phase (reporting phase).

With reference to FIG. 1, the foregoing briefly describes a scenario to which a communication method provided in embodiments of this application can be applied, describes basic concepts that may be used in embodiments of this application, and describes an SBP procedure and a multi-link device in the basic concepts. A solution in which an SBP procedure is performed in a multi-link device scenario is provided. An SBP setup procedure in this solution includes the following steps: An SBP initiator sends an SBP request frame. The SBP request frame carries an SBP parameters element and a sensing measurement parameters element, and the SBP parameters element includes a sensing responder list and quantity and a sensing link list and quantity. The SBP responder returns an SBP response frame, indicating a quantity of links and a link list.

In the SBP setup procedure, the SBP parameters element carries the sensing responder list and quantity and the link list and quantity, but does not indicate usage of a parameter. Consequently, some problems may occur.

For example, the link list and the responder list provided in the SBP parameters element have a same priority. It is assumed that both a responder and a link are mandatory. For example, the link list includes a link #1, the responder list includes a responder #1, and both the link #1 and the responder #1 are mandatory. However, the responder #1 cannot perform sensing measurement on the link #1, and SBP cannot be set up.

For example, a quantity of mandatory links in the link list provided in the SBP parameters element is inconsistent with information about a quantity of mandatory links. For example, the link list includes a mandatory link #1 and a mandatory link #2, but the quantity of mandatory links is indicated to be 1. Field meanings are contradictory, and SBP cannot be set up.

To resolve a problem existing in the SBP procedure in the foregoing multi-link device scenario, this application provides a communication method, to perform SBP measurement in a scenario in which a multi-link device participates in sensing measurement.

The following describes the technical solutions provided in this application in detail with reference to accompanying drawings. Embodiments of this application may be applied to a plurality of different scenarios, including but not limited to the scenario shown in FIG. 1.

It should be understood that a specific structure of an execution body of the method provided in embodiments of this application is not particularly limited in the following embodiments, provided that a program that records code of the method provided in embodiments of this application can be run to perform communication according to the method provided in embodiments of this application. For example, the execution body of the method provided in embodiments of this application may be a receiver device or a transmitter device, or a functional module that is in the receiver device or the transmitter device and that can invoke the program and execute the program.

Without a loss of generality, the following describes in detail the communication method provided in embodiments of this application by using interaction between a first MLD and a second MLD as an example. In embodiments of this application, the first MLD may be an access point AP or a chip system inside the AP, and the second MLD may be a non-access point non-AP (for example, a STA) or a chip system inside the non-AP; or the first MLD may be a non-AP or a chip system inside the non-AP, and the second MLD may be an AP or a chip system inside the AP; or the first MLD and the second MLD are access points APs or chip systems inside the APs; or the first MLD and the second MLD are non-access points non-APs or chip systems inside the non-APs.

FIG. 9 is a schematic flowchart of a communication method according to an embodiment of this application. The method includes the following steps.

S910: A first MLD generates a request message.

In this embodiment, the first MLD is an SBP initiator, and a second MLD is an SBP responder. The first MLD and the second MLD are multi-link devices. For example, the first MLD is the non-AP MLD shown in FIG. 4, and the second MLD is the AP MLD shown in FIG. 4.

In addition, the first MLD in this embodiment may also be referred to as a first station, and the second MLD may also be referred to as a second station. The station may be an AP or a non-AP.

It should be understood that a name of an execution body is not limited in this embodiment. All devices that can implement a function of the first MLD may be understood as the first MLD in this embodiment. Similarly, all devices that can implement a function of the second MLD may be understood as the second MLD in this embodiment.

Specifically, in this embodiment, the first MLD may send a sensing by proxy request to the second MLD to request the second MLD to serve as a proxy of the first MLD to obtain a sensing result obtained by another station (for example, an MLD other than the first MLD, or an MLD including the first MLD) in a sensing process (or request the second MLD to obtain a sensing result of a third MLD). In this embodiment, a sensing responder participating in sensing measurement is also a multi-link device. For example, the third MLD is the non-AP MLD or the AP MLD shown in FIG. 4.

It should be noted that, in this embodiment, that the first MLD specifically requests the second MLD to serve as a proxy of the first MLD to obtain a sensing result obtained by which MLDs in the sensing process is not limited, which may be requesting the second MLD to obtain a sensing result obtained by at least one MLD in the sensing process. For differentiation, the at least one MLD is referred to as at least one sensing responder below.

It can be learned from the foregoing descriptions of the SBP procedure that the SBP procedure includes three steps: SBP setup exchange, SBP reporting, and SBP termination. The request message is a request message sent by the SBP initiator to the SBP responder in a process of SBP setup exchange, and is used to request to setup SBP.

For example, the request message in this embodiment may be referred to as an SBP request frame, a multi-link SBP request frame, or an SBP setup request frame. It should be understood that a name of a message is not limited in this embodiment, and all messages that can implement a function of the request message may be understood as the request message in this embodiment.

In this embodiment, the first MLD requests, by using the request message, the second MLD to set up SBP measurement. The request message carries a parameter required for the first MLD to entrust the second MLD to initiate sensing measurement. For example, the request message carries information about at least one MLD, where the first MLD expects the second MLD to obtain a sensing result of the at least one MLD. For another example, the request message carries information required for initiating sensing measurement and/or transmitting a measurement report, such as time information for receiving the measurement report by the first MLD.

S920: The first MLD sends the request message to the second MLD. In other words, the second MLD receives the request message from the first MLD.

Specifically, in this embodiment, the parameter required for initiating sensing measurement includes first indication information. The first indication information indicates a link onto which a first sensing responder is mapped, and the first sensing responder is any one of at least one sensing responder that may participate in sensing measurement. In this embodiment, the first MLD may indicate, by using the request message to carry the first indication information, a link onto which any sensing responder is mapped.

In a possible implementation, the request message includes information about at least one sensing responder and at least one piece of first indication information respectively corresponding to the at least one sensing responder, the first sensing responder is any one of the at least one sensing responder, and the first indication information is first indication information corresponding to the first sensing responder in the at least one piece of first indication information.

For example, the request message includes information about a sensing responder #1 and information about a sensing responder #2, indicating that a sensing by proxy initiator requests a sensing by proxy responder to obtain a sensing result of the sensing responder #1 and a sensing result of the sensing responder #2 on behalf. The request message includes first indication information #1 and first indication information #2. The first indication information #1 indicates a link onto which the sensing responder #1 is mapped, and the first indication information #2 indicates a link onto which the sensing responder #2 is mapped.

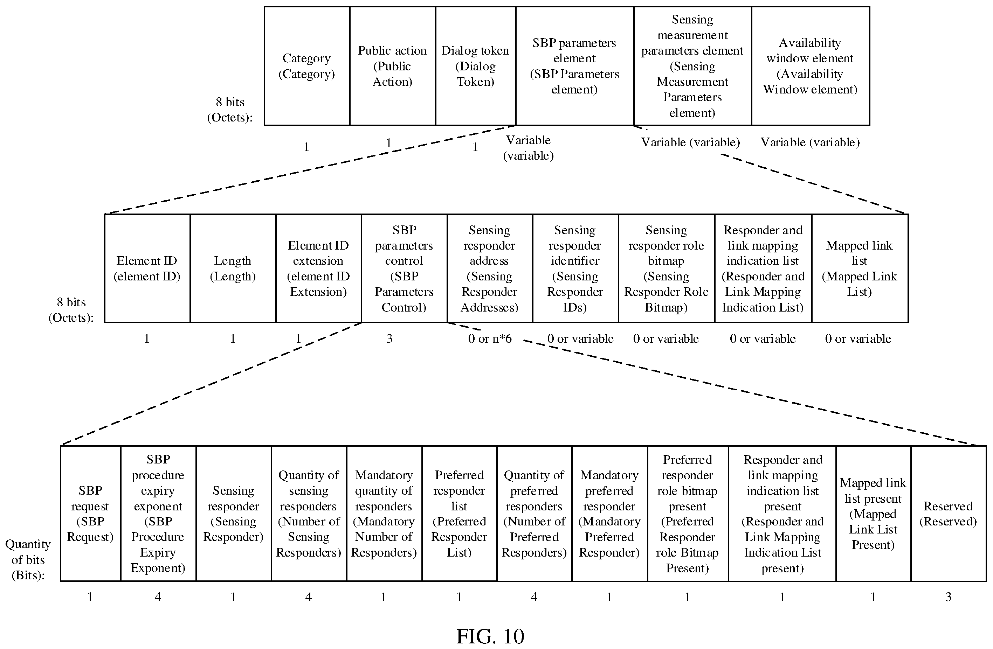

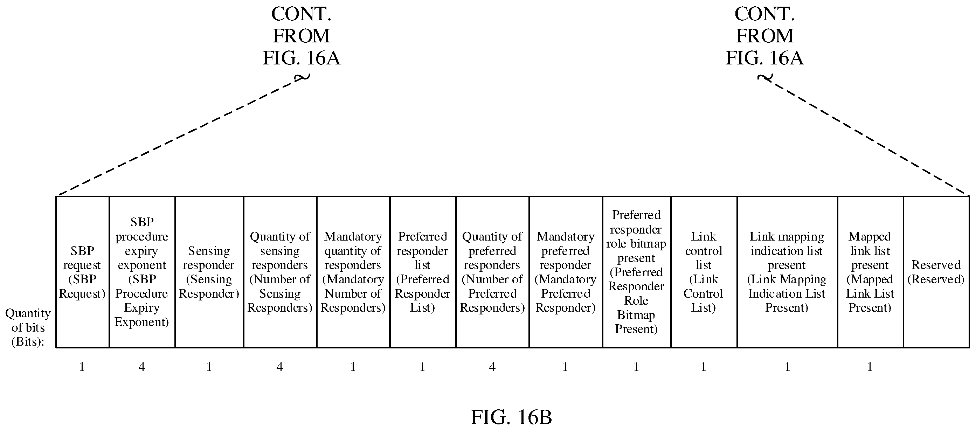

For ease of understanding, with reference to FIG. 10 to FIG. 16A and FIG. 16B, the following describes in detail a manner in which the request message includes the first indication information when the request message includes the information about the at least one sensing responder and the at least one piece of first indication information respectively corresponding to the at least one sensing responder.

In another possible implementation, the first indication information further indicates a link onto which a sensing responder participating in the SBP measurement other than the first responder is mapped, and the first sensing responder is any one of a sensing responder participating in the SBP measurement.

In this implementation, the first indication information may indicate link situations corresponding to all sensing responders participating in sensing measurement. To be specific, for a sensing by proxy initiator, the link situations corresponding to all the sensing responders are the same, and no indication needs to be separately performed for different sensing responders.

For example, the request message includes the first indication information, and the first indication information indicates that links corresponding to all the sensing responders include a link #1 and a link #2, indicating that the sensing by proxy initiator requests a sensing by proxy responder to obtain, through the link #1 and/or the link #2, a sensing result that is of a sensing responder and that can be obtained.

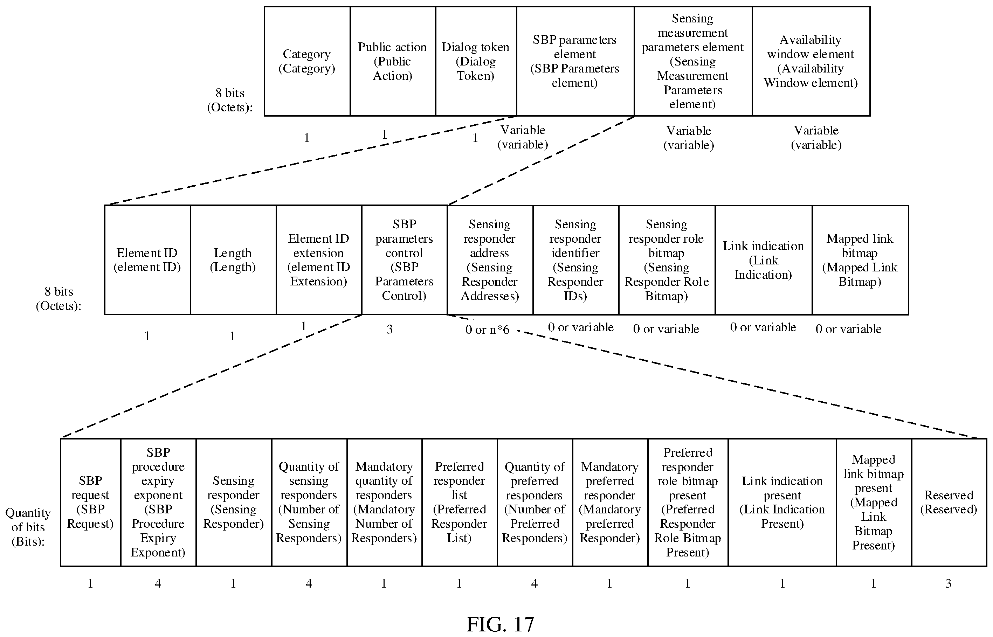

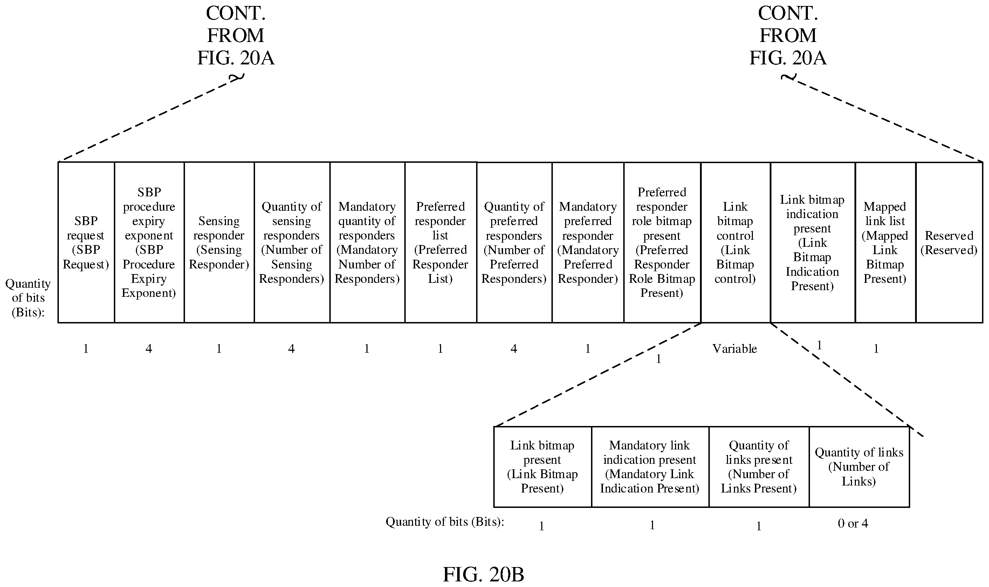

For ease of understanding, with reference to FIG. 17 to FIG. 20A and FIG. 20B, the following describes in detail a manner in which the request message includes the first indication information when the first indication information indicates links onto which all sensing responders participating in sensing measurement are mapped.

In the communication method shown in FIG. 9, in a scenario in which the multi-link device participates in sensing by proxy measurement, a request message sent by the sensing by proxy initiator to the sensing by proxy responder to request to set up sensing by proxy measurement includes a link situation onto which the first sensing responder is mapped, so that the sensing by proxy responder can clearly learn of a requirement of the sensing by proxy initiator for each sensing responder link, thereby facilitating setup of sensing by proxy measurement, improving efficiency of setting up sensing by proxy measurement, and avoiding a sensing by proxy measurement setup failure. In this way, sensing by proxy measurement is set up in the scenario in which the multi-link device participates in sensing by proxy measurement.

Manner 1: The request message includes the information about the at least one sensing responder and the at least one piece of first indication information respectively corresponding to the at least one sensing responder. Each piece of first indication information indicates a link situation onto which a responder corresponding to the first indication information is mapped. The at least one sensing responder is a sensing responder that is provided by the first MLD and that is expected to participate in an SBP sensing measurement procedure, and the information about the sensing responder includes but is not limited to information used to identify the sensing responder, such as an address and an identifier of the sensing responder.

For example, the first MLD is the non-AP STA 1 shown in FIG. 1, and the first MLD requests an AP 1 to serve as a proxy of the non-AP STA 1 to obtain sensing results obtained by an AP 2, a non-AP STA 2, and a non-AP STA 3 in the sensing process. In this case, an address of the at least one sensing responder includes information about the AP 2, information about the non-AP STA 2, and information about the non-AP STA 3.

It should be understood that, the sensing responder used in this embodiment is a multi-link device. In this case, the request message includes at least one piece of first indication information indicating a link situation onto which the at least one responder is respectively mapped. In this way, after receiving the request message, the second MLD can learn of link situations corresponding to different sensing responders based on the at least one piece of first indication information carried in the request message.

For example, the first MLD is the non-AP STA 1 shown in FIG. 1, and the first MLD requests an AP 1 to serve as a proxy of the non-AP STA 1 to obtain sensing results obtained by an AP 2, a non-AP STA 2, and a non-AP STA 3 in the sensing process. The request message includes information about the AP 2, information about the non-AP STA 2, information about the non-AP STA 3, first indication information #1, first indication information #2, and first indication information #3. The first indication information #1 indicates a link situation onto which the AP 2 is mapped, the first indication information #2 indicates a link situation onto which the non-AP STA 2 is mapped, and the first indication information #3 indicates a link situation onto which the non-AP STA 3 is mapped. For example, the first indication information #1 indicates the AP 2 to perform sensing measurement (including information transmission and measurement report feedback in a sensing measurement process) through the link #1, the first indication information #2 indicates the non-AP STA 2 to perform sensing measurement through the link #2, and the first indication information #3 indicates the non-AP STA 3 to perform sensing measurement through the link #3.

In the case shown in Manner 1, the request message may further include a control parameter, and the control parameter includes a parameter indicating that the request message carries the at least one piece of first indication information.

For ease of understanding, the following describes a format of the request message in the case shown in Manner 1 with reference to a specific example.

Example 1: An example in which the request message is an SBP request frame, and the at least one piece of first indication information is included in an SBP parameters element in the SBP request frame is used for description.

As shown in FIG. 10, the SBP parameters element includes the first indication information, and the SBP parameters element is equivalent to the parameter required for sensing measurement. It can be learned from FIG. 10 that, compared with the SBP parameters element in the SBP request frame shown in FIG. 5 and the SBP parameters element in the SBP response frame shown in FIG. 6, the SBP parameters element in this embodiment may carry a responder and link mapping indication list (Responder and Link Mapping Indication List) field or a mapped link list (Mapped Link List) field.

It should be noted that FIG. 10 shows a frame format that covers a plurality of cases. As shown in FIG. 10, a length of the responder and link mapping indication list field is 0 or variable. If the length is 0, it indicates that the field does not exist; or if the length is not 0, the length of the field is variable. The specific length may be determined based on a quantity of sensing responders in a to-be-indicated sensing responder and link mapping situation. This is not limited in this embodiment. As shown in FIG. 10, a length of the mapped link list field is 0 or variable. If the length is 0, it indicates that the field does not exist; or if the length is not 0, the length of the field is variable. The specific length may be determined based on a quantity of sensing responders in a to-be-indicated sensing responder and link mapping situation. This is not limited in this embodiment.

It should be understood that, in the case shown in Example 1, a frame shown in FIG. 10 is an SBP request frame, and the SBP request frame includes at least one piece of first indication information. The responder and link mapping indication list field shown in FIG. 10 is equivalent to the at least one piece of first indication information. In other words, the SBP parameters element includes the responder and link mapping indication list field. It may be understood that the length of the responder and link mapping indication list field needs to be variable rather than 0. The length of the mapped link list field in the SBP request frame shown in FIG. 10 is set to 0, and the length of the responder and link mapping indication list field is set to variable, to indicate the SBP request frame that carries the at least one piece of first indication information.

For example, the length of the responder and link mapping indication list field may be n*6. A value of n is related to the quantity of sensing responders provided by the first MLD.

For example, whether the SBP parameters element carries the responder and link mapping indication list field or the mapped link list field may be indicated by adding corresponding indication information to SBP parameters control.

It can be learned from FIG. 10 that, compared with SBP parameters control in the SBP request frame shown in FIG. 5 and SBP parameters control in the SBP response frame shown in FIG. 6, SBP parameters control shown in FIG. 10 includes a responder and link mapping indication list present (Responder and Link Mapping Indication List Present) field or a mapped link list present (Mapped Link List Present) field. Specifically, the responder and link mapping indication list present field indicates whether the SBP parameters element carries the link mapping indication list field; and the mapped link list present field indicates whether the SBP parameters element carries the mapped link list field. For example, if the frame format shown in FIG. 10 is an SBP request frame, the SBP parameters element in the SBP request frame includes the responder and link mapping indication list field, and SBP parameters control in the SBP parameters element includes the responder and link mapping indication list present field; or if the frame format shown in FIG. 10 is an SBP response frame (which is described below based on a response message sent by the second MLD), the SBP parameters element in the SBP response frame may include a mapped link list field, and SBP parameters control in the SBP parameters element includes the mapped link list present field.

Specifically, the responder and link mapping indication list includes at least one sensing responder and link mapping indication (Responder and Link Mapping Indication List) field, and an arrangement order of the at least one sensing responder and link mapping indication field is consistent with an order of at least one sensing responder address included in the SBP request frame.

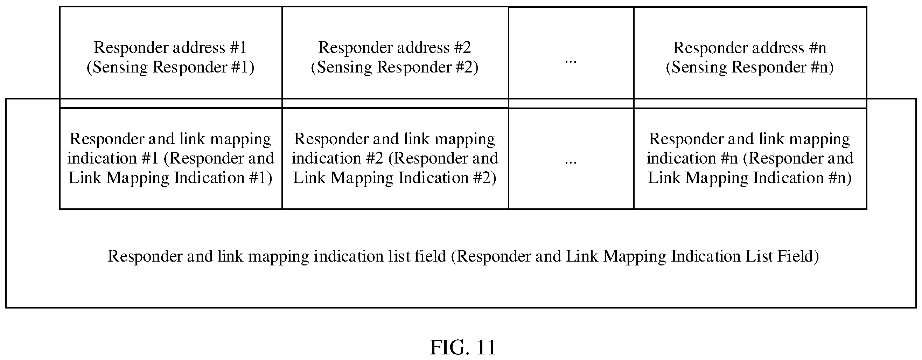

As shown in FIG. 11, if the request message (for example, the SBP request frame) includes n sensing responder addresses (Responder Address) (for example, a sensing responder address #1, a sensing responder address #2, ..., and a sensing responder address #n shown in FIG. 11), the sensing responder and link mapping indication list includes n sensing responder and link mapping indication (Responder and Link Mapping Indication) fields (for example, a sensing responder and link mapping indication #1, a sensing responder and link mapping indication #2, ..., a sensing responder and link mapping indication #n shown in FIG. 11). The sensing responder address #1 corresponds to the sensing responder and link mapping indication #1, and the sensing responder and link mapping indication #1 indicates a link situation of a sensing responder corresponding to the sensing responder address #1; similarly, the sensing responder address #2 corresponds to the sensing responder and link mapping indication #2, and the sensing responder and link mapping indication #2 indicates a link situation of a sensing responder corresponding to the sensing responder address #2; ...; and the sensing responder address #n corresponds to the sensing responder and link mapping indication #n, and the sensing responder and link mapping indication #n indicates a link situation of a sensing responder corresponding to the sensing responder address #n.

In a possible implementation, the first indication information includes a first control field (which may be referred to as a link bitmap control (Link Bitmap Control) field below) and one or both of a mandatory link indication field (which may be referred to as a mandatory link bitmap (Mandatory Link Bitmap) field below) and a preferred link indication field (which may be referred to as a preferred link bitmap (Preferred Link Bitmap) field below). The first control field includes information about the mandatory link indication field and information about the preferred link indication field (for example, information, a field length, and position information for controlling whether the mandatory link indication field and the preferred link indication field exist), the mandatory link indication field indicates a mandatory link for the first sensing responder, and the preferred link indication field indicates a preferred link for the first sensing responder. Link bitmap (for example, link bitmap, preferred link bitmap, or mandatory link bitmap) in this application may be understood as a link identifier (Link ID). For example, a value of an i^{th} bit in link bitmap is 1, a bit position (bit position) is i-1, and a corresponding link ID is i-1. For example, a value of a 3^{rd} bit in link bitmap is 1, and a corresponding link ID is 2. For another example, a value of a 1^{st} bit in link bitmap is 1, and a corresponding link ID is 0.

For example, if the first indication information includes the mandatory link indication field indicating the link #1, and further includes the preferred link indication field indicating the link #1 and the link #2, it indicates that the first MLD expects the first sensing responder to perform sensing measurement on the link #1 and the link #2, and the link #1 is mandatory.

For example, the first indication information includes information (referred to as a mandatory link bitmap present (Mandatory Link Bitmap Present) field below) indicating whether the mandatory link indication field exists and information (referred to as a preferred link bitmap present (Preferred Link Bitmap Present) field below) indicating whether the preferred link indication field exists.

Further, the first indication information may further include information indicating a quantity of links (referred to as a quantity of links (Number of Links) field below). The information indicating the quantity of links indicates a quantity of links corresponding to the first sensing responder, and the information indicating the quantity of links may also be used as a field in first control information.

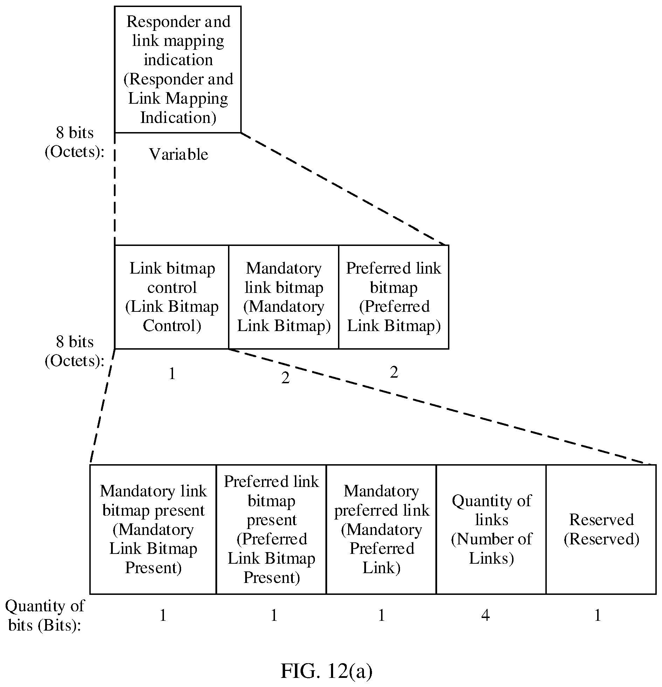

For ease of understanding, the following describes in detail a possible form of the first indication information in this implementation with reference to FIG. 12(a) to FIG. 12(c). The first indication information may be understood as each responder and link mapping indication field.

For example, as shown in FIG. 12(a), the first indication information may include the link bitmap control (Link Bitmap Control) field, the mandatory link bitmap (Mandatory Link Bitmap) field, and preferred link bitmap (Preferred Link Bitmap). The link bitmap control field controls mandatory link bitmap and preferred link bitmap.

It can be learned from FIG. 12(a) that the link bitmap control field may include the mandatory link bitmap present (Mandatory Link Bitmap Present) field, the preferred link bitmap present (Preferred Link Bitmap Present) field, the mandatory preferred link (Mandatory Preferred Link) field, the quantity of links (Number of Links) field, and a reserved field.

For example, the fields included in the link bitmap control field control the mandatory link bitmap field and the preferred link bitmap field in manners including but not limited to the following manners:
(1) If the mandatory link bitmap present field is set to 1, the mandatory link bitmap field exists, and the preferred link bitmap field does not exist.
(2) If the mandatory link bitmap present field is set to 0, the mandatory link bitmap field does not exist, and the quantity of links field exists, indicating a quantity of links requested by the first station.
(3) If the mandatory link bitmap present field is set to 0 and the preferred link bitmap present field is set to 1, the preferred link bitmap field exists, and the mandatory link bitmap field may indicate whether a link indicated by the preferred link bitmap field is mandatory.
(4) If the mandatory link bitmap present field is set to 0 and the preferred link bitmap present field is set to 0, the preferred link bitmap field does not exist, and the mandatory link bitmap field does not exist.
(5) If the quantity of links field exists, it indicates a quantity of links requested by the first MLD.

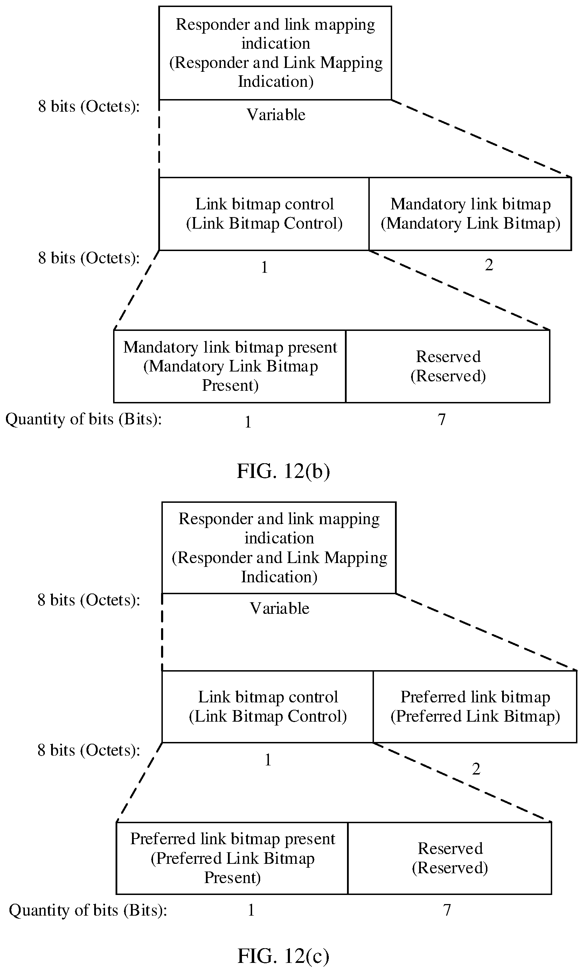

For example, the mandatory link bitmap field and the preferred link bitmap are optional. As shown in FIG. 12(b), the first indication information may include the link bitmap control field and the mandatory link bitmap field. The link bitmap control field controls mandatory link bitmap.

It can be learned from FIG. 12(b) that the link bitmap control field may include the mandatory link bitmap present field and the preferred link bitmap present field. It may be understood that, in the case shown in FIG. 12(b), the mandatory link bitmap field is newly added in the SBP parameters element, and the mandatory link bitmap present field is newly added in the SBP parameters control field.

For example, as shown in FIG. 12(c), the first indication information may include the link bitmap control field and preferred link bitmap. The link bitmap control field controls preferred link bitmap.

It can be learned from FIG. 12(c) that the link bitmap control field may include the mandatory link bitmap present field and the preferred link bitmap present field. It may be understood that, in the case shown in FIG. 12(b), the preferred link bitmap field is newly added in the SBP parameters element, and the preferred link bitmap present field is newly added in the SBP parameters control field.

It should be understood that FIG. 12(a) to FIG. 12(c) show only examples of possible forms of the first indication information when the first control field and one or both of the mandatory link indication field and the preferred link indication field are included, and do not constitute any limitation on a protection field in this application. All information that can implement a function of the first indication information may be understood as the first indication information in this embodiment.

In another possible implementation, the first indication information includes a second control field (which may be referred to as a link identifier bitmap control (Link Bitmap Control) field below) and one or both of a link identifier field (which may be referred to as a link bitmap (Link Bitmap) field below) and a mandatory indication field (which may be referred to as a mandatory link indication bitmap (Mandatory Link Indication Bitmap) field below). The second control field is used to control the link identifier field and the mandatory indication field (for example, control whether the link identifier field and the mandatory indication field exist), the link identifier field indicates at least one link provided by the first MLD for all sensing responders (including the first sensing responder and a sensing responder that may participate in sensing measurement other than the first sensing responder), and the mandatory indication indicates whether the at least one link indicated by the link identifier field is mandatory.

For example, if the first indication information includes the link identifier field indicating the link #1 and the link #2, and further includes the mandatory indication field indicating that the link #1 is mandatory and the link #2 is optional, it indicates that the first MLD expects the first sensing responder to perform sensing measurement on the link #1 and the link #2, and the link #1 is mandatory.

For example, the second control field includes information (referred to as a link bitmap present (Link Bitmap Present) field below) indicating whether the link identifier field exists and information (referred to as a mandatory link indication bitmap present (Mandatory Link Indication Bitmap Present) field below) indicating whether the mandatory indication field exists.

Further, the first indication information may further include information indicating a quantity of links (referred to as a quantity of links (Number of Links) field below). The information indicating the quantity of links indicates a quantity of links corresponding to all sensing responders.

Optionally, when the first indication information includes the information indicating the quantity of links, the second control field may further include information indicating whether the information indicating the quantity of links exists (referred to as quantity of links present (Number of Links Present) below). The information indicating the quantity of links may also be used as a field in the second control information.

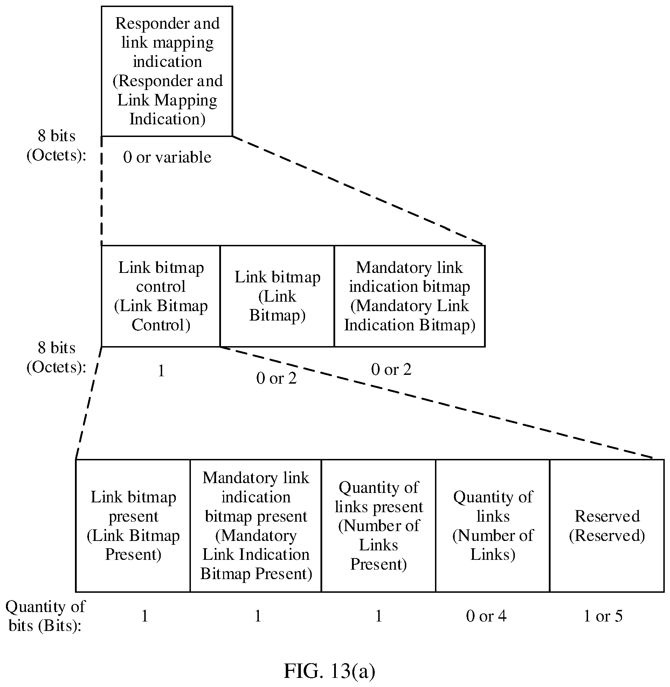

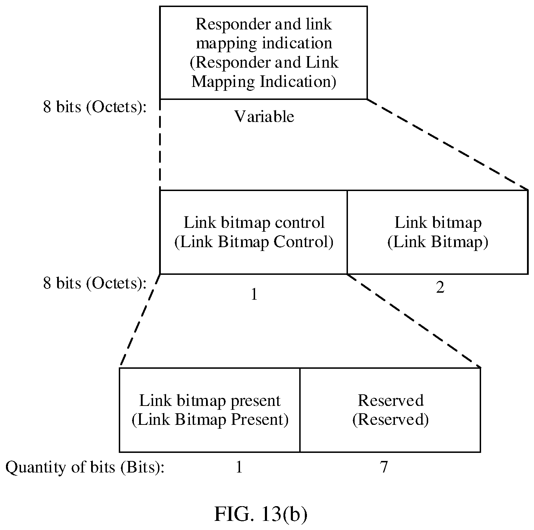

For ease of understanding, the following describes in detail a possible form of the first indication information in this implementation with reference to FIG. 13(a) and FIG. 13(b). The first indication information may be understood as all responder and link mapping indication fields.

For example, the first indication information is shown in FIG. 13(a), and may include a link bitmap control (Link Bitmap Control) field, a link bitmap (Link Bitmap) field, and a mandatory link indication bitmap (Mandatory Link Indication Bitmap) field.

It can be learned from FIG. 13(a) that the link bitmap control field may include the link bitmap present (Link Bitmap Present) field, the mandatory link indication bitmap present (Mandatory Link Indication Bitmap Present) field, the quantity of links present (Number of Links Present) field, the quantity of links (Number of Links) field, and a reserved field.

The link bitmap present field in the link bitmap control field indicates whether the link bitmap exists, the mandatory link indication bitmap present field indicates whether the mandatory link indication exists, the quantity of links present field indicates whether the quantity of links field exists, and the quantity of links field indicates a quantity of requested links.

The link bitmap field indicates an optional link provided by the first MLD. The mandatory link indication bitmap field indicates whether a link indicated when a value of each bit (bit) in the link bitmap field is a preset value (for example, the value of the bit is 1) is preferred or mandatory.

Optionally, the link bitmap field and the mandatory link indication bitmap field are in one-to-one correspondence, and have a same length. For example, when a mandatory link indication bitmap field corresponding to a position at which link bitmap is 1 is set to 1, it indicates that a link indicated by the bit is mandatory; or when the mandatory link indication bitmap field is set to 0, it indicates that a link indicated by the bit is optional.

Optionally, the link bitmap field and the mandatory link indication bitmap field are not in one-to-one correspondence, and have inconsistent lengths. For example, when a mandatory link indication bitmap field corresponding to a position at which a link bitmap is 1 is set to 11, it indicates that a link indicated by the bit is mandatory; or when the mandatory link indication bitmap field is set to 10 or 01 or 00, it indicates that a link indicated by the bit is optional.

It should be noted that, in this embodiment, a length relationship between the link bitmap field and the mandatory link indication bitmap field is not limited, and may be in one-to-one correspondence, or may be in a one-to-many or many-to-one relationship.

For example, the fields included in the link bitmap control field control mandatory link bitmap and preferred link bitmap in manners including but not limited to the following manners:
(1) If the link bitmap field exists, it indicates an optional link identifier (Link ID).
(2) If the mandatory link indication bitmap (Mandatory Link Indication Bitmap) field exists, it indicates a mandatory link (Link) and an optional link.
(3) If the quantity of links (Number of Links) field exists, it indicates a quantity of requested links, and indicates that the requested links include all mandatory links and some optional links.
(4) If the quantity of links (Number of Links) field does not exist, the requested link is a mandatory link. There is another extended indication.
(5) If the mandatory link indication bitmap (Mandatory Link Indication Bitmap) field does not exist but the number of links field exists, it indicates a quantity of requested links.

It should be understood that, in the responder and link mapping indication field shown in FIG. 13(a), a mandatory link indication bitmap (Mandatory Link Indication Bitmap) field corresponding to a position at which a link bitmap (Link Bitmap) is 0 is 0, and the second MLD does not read the information.

For example, the mandatory indication field is optional, and as shown in FIG. 13(b), the first indication information may include the link bitmap control field and the link bitmap field. It may be understood that, in the case shown in FIG. 13(b), the link bitmap field is newly added in the SBP parameters element, and the link bitmap present field is newly added in the SBP parameters control field.

It can be learned from FIG. 13(b) that the link bitmap control field may include the link bitmap present field and a reserved field. The link bitmap present field in the link bitmap control field indicates whether the link bitmap exists.

It should be further understood that FIG. 13(a) and FIG. 13(b) show only examples of possible forms of the first indication information including the second control field and one or both of the link identifier field and the mandatory indication field, and do not constitute any limitation on a protection field in this application. All information that can implement a function of the first indication information may be understood as the first indication information in this embodiment.

For example, a difference between the responder and link mapping indication field shown in FIG. 12(a) to FIG. 12(c) and the responder and link mapping indication field shown FIG. 13(a) and FIG. 13(b) is as follows: A mandatory link list is set in the responder and link mapping indication fields shown in FIG. 12(a) to FIG. 12(c). If the link list is mandatory, the requested link is consistent with a link in the given mandatory link list, and the quantity of requested links is equal to a quantity of mandatory links. The quantity of requested links that is set in the responder and link mapping indication field shown in FIG. 13(a) and FIG. 13(b) may be inconsistent with a quantity of mandatory links. In other words, the requested links may include the mandatory link and a link in an optional link list. For example, if three links are requested and two links are mandatory, the SBP responder can select a 3^{rd} link from the optional link list. Such a setting provides both accurate link selection and flexibility.

It should be noted that in the example shown in FIG. 10, that the at least one piece of first indication information is included in the SBP parameters element in the SBP request frame is merely an example, and does not constitute any limitation on the protection scope of this application.

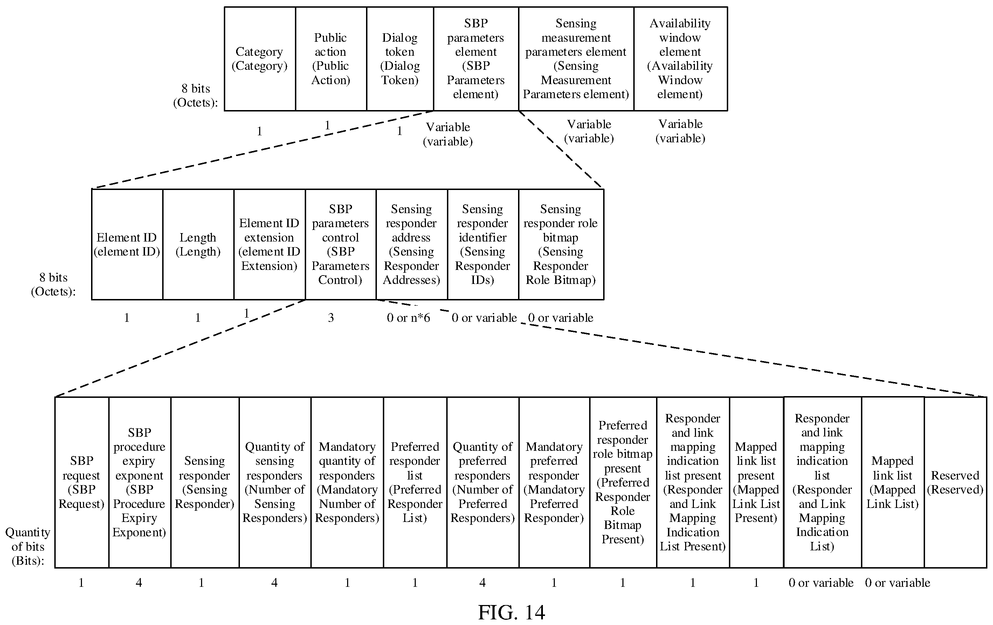

For example, in this embodiment, the first indication information may be further included in the SBP parameters control (SBP Parameters Control) field. As shown in FIG. 14, in a frame structure shown in FIG. 14, the responder and link mapping indication list field or the mapped link list field may be carried in the SBP parameters control field.

For another example, the at least one piece of first indication information may be split into different content, and the different content may be separately carried in the SBP parameters element and the SBP parameters control field.

In a possible implementation, control-related information in the at least one piece of first indication information is carried in the SBP parameters control field, and other information is carried in the SBP parameters element. For example, the first control field in the first indication information is carried in the SBP control parameter of the request message, and the mandatory link indication field and the preferred link indication field are carried in the SBP parameters element of the request message.

For example, in this implementation, the responder and link mapping indication list field is split into two fields: the link control list (Link Control List) field and the link mapping indication list (Link Mapping Indication List) field. The link control list field is carried in an SBP parameters control field, and the link mapping indication list field is carried in the SBP parameters element field.

For example, link control list (Link Control List) includes a link control (Link Control) field corresponding to at least one sensing responder, and each link control field includes the mandatory link bitmap present (Mandatory Link Bitmap Present) field, the preferred link bitmap present (Preferred Link Bitmap Present) field, the mandatory preferred link (Mandatory Preferred Link) field, and the quantity of links (Number of Links) field shown in FIG. 12(a).

For example, the link mapping indication list (Link Mapping Indication List) field includes a link mapping indication (Link Mapping Indication) corresponding to at least one sensing responder, and each link mapping indication field includes the mandatory link bitmap (Mandatory Link Bitmap) field and the preferred link bitmap (Preferred Link Bitmap) field shown in FIG. 12(a).

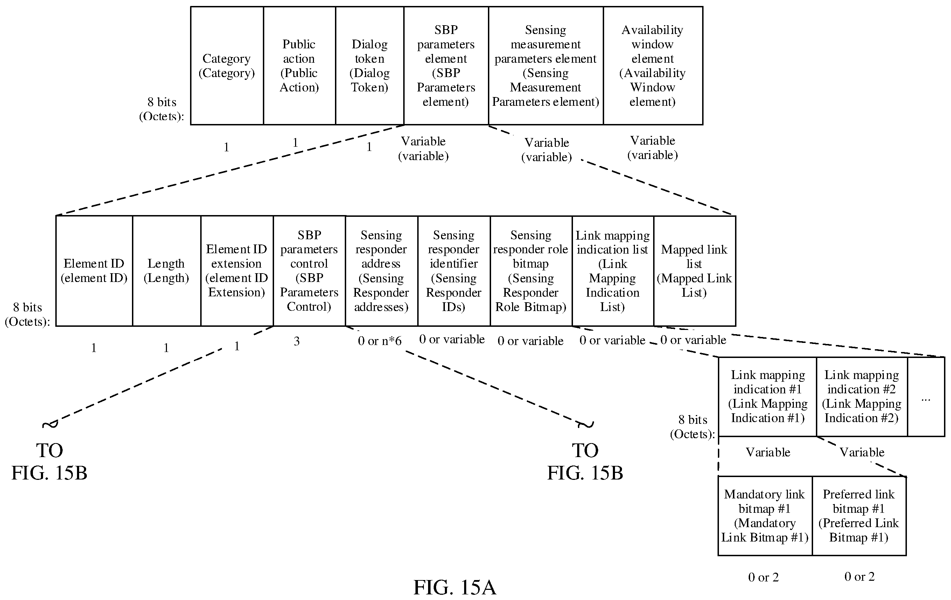

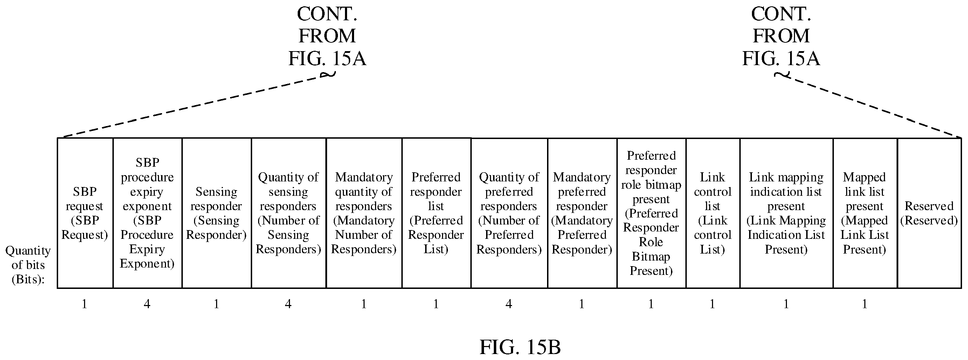

As shown in FIG. 15A and FIG. 15B, in a frame structure shown in FIG. 15A and FIG. 15B, the responder and link mapping indication list (Responder and Link Mapping Indication List) field is split into two fields: a link control list (Link Control List) field and a link mapping indication list (Link Mapping Indication List) field, and the link control list (Link Control List) field is carried in the SBP parameters control field. As shown in FIG. 14, the SBP parameters control field includes the link control list (Link Control List) field, the link mapping indication list present (Link Mapping Indication List Present) field, or the mapped link list present (Mapped Link List Present) field. The SBP parameters element field includes the link mapping indication list (Link Mapping Indication List) field and the mapped link list (Mapped Link List) field.

In another possible implementation, the first indication information includes the second control field and one or both of the link identifier field and the mandatory indication field. Control-related information in the first indication information is carried in the SBP parameters control field, and other information is carried in the SBP parameters element. For example, the second control field in the first indication information is carried in the SBP control parameter of the request message, and the link identifier field and the mandatory indication field are carried in the SBP parameters element of the request message.

For example, in this implementation, the responder and link mapping indication list (Responder and Link Mapping Indication List) field is split into two fields: the link control list (Link Control List) field and the link mapping indication list (Link Mapping Indication List) field. The link control list field is carried in an SBP parameters control field, and the link mapping indication list field is carried in the SBP parameters element field.

For example, link control list (Link Control List) includes a link control (Link Control) field corresponding to at least one sensing responder, and each link control field includes the link bitmap present (Link Bitmap Present) field, the mandatory link indication bitmap present (Mandatory Link Indication Bitmap Present) field, the quantity of links present (Number of Links Present) field, and the quantity of links (Number of Links) field shown in FIG. 13(a).

For example, the link mapping indication list (Link Mapping Indication List) field includes a link mapping indication (Link Mapping Indication) corresponding to at least one sensing responder, and each link mapping indication field includes the link bitmap (Link Bitmap) field and the mandatory link indication bitmap (Mandatory Link Indication Bitmap) field shown in FIG. 13(a).

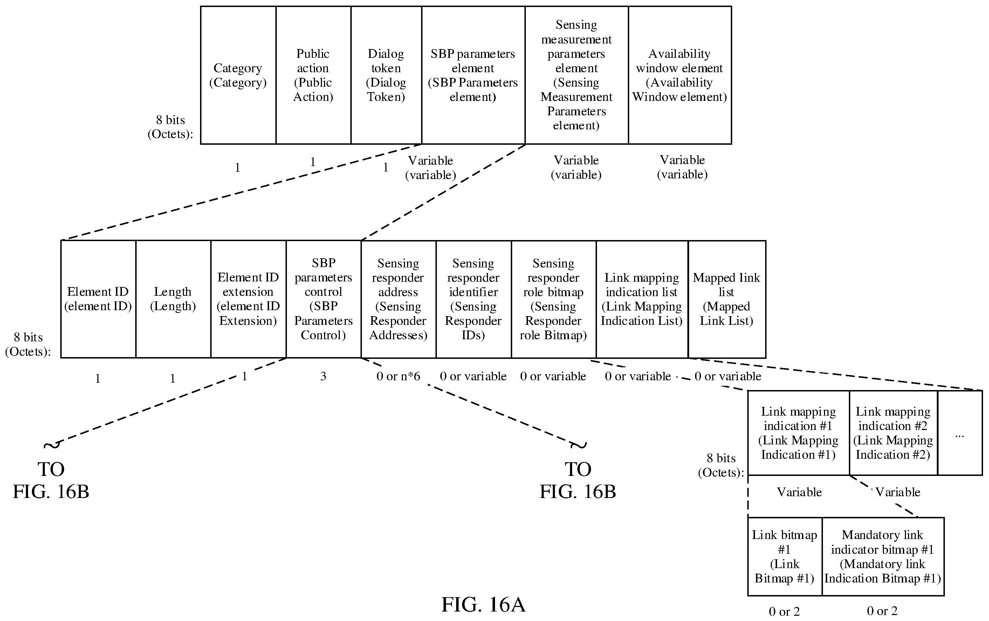

As shown in FIG. 16A and FIG. 16B, in a frame structure shown in FIG. 16A and FIG. 16B, the responder and link mapping indication list (Responder and Link Mapping Indication List) field is split into two fields: a link control list (Link Control List) field and a link mapping indication list (Link Mapping Indication List) field, and the link control list (Link Control List) field is carried in the SBP parameters control field. As shown in FIG. 16A and FIG. 16B, the SBP parameters control field includes the link control list (Link Control List) field, the link mapping indication list present (Link Mapping Indication List Present) field, or the mapped link list present (Mapped Link List Present) field. The SBP parameters element field includes the link mapping indication list (Link Mapping Indication List) field and the mapped link list (Mapped Link List) field.

It can be learned from the foregoing that, in the case shown in Example 1, a link requirement for each responder is precisely indicated based on a correspondence between at least one sensing responder and a link.

Manner 2: The first indication information indicates link situations corresponding to all devices participating in sensing measurement. For example, all the devices participating in sensing measurement include the first responder and another sensing responder participating in sensing measurement. In this case, the first indication information indicates a link onto which the first responder and the another sensing responder participating in SBP measurement are mapped, and the first sensing responder is any one of a sensing responder participating in SBP measurement.

In the case shown in Manner 2, regardless of a specific sensing responder or specific sensing responders that are a sensing responder that participates in sensing measurement and that is selected by the second MLD, a link corresponding to the selected sensing responder is determined based on the first indication information.

For example, in the case shown in Manner 2, the request message may alternatively include the information about the at least one sensing responder, and the first indication information indicates a link situation onto which the at least one sensing responder is mapped. The at least one sensing responder is a sensing responder that is provided by the first MLD and that is expected to participate in an SBP sensing measurement procedure, and the information about the sensing responder includes but is not limited to information used to identify the sensing responder, such as an address and an identifier of the sensing responder.

For example, the first MLD is the non-AP STA 1 shown in FIG. 1, and the first MLD requests an AP 1 to serve as a proxy of the non-AP STA 1 to obtain sensing results obtained by an AP 2, a non-AP STA 2, and a non-AP STA 3 in the sensing process. In this case, an address of the at least one sensing responder includes information about the AP 2, information about the non-AP STA 2, and information about the non-AP STA 3.

It should be understood that, the sensing responder used in this embodiment is a multi-link device. In this case, the request message includes the first indication information indicating link situations of all sensing responders. In this way, after receiving the request message, the second MLD can learn of the link situation corresponding to the sensing responder based on the first indication information carried in the request message.

For example, the first MLD is the non-AP STA 1 shown in FIG. 1, and the first MLD requests the AP 1 to serve as a proxy of the non-AP STA 1 to obtain sensing results obtained by an AP 2, a non-AP STA 2, and a non-AP STA 3 in the sensing process. The request message includes information about the AP 2, information about the non-AP STA 2, information about the non-AP STA 3, and the first indication information. The first indication information indicates the AP 2, the non-AP STA 2, and the non-AP STA 3 to perform sensing measurement through the link #1.

In the case shown in Manner 2, the request message further includes a control parameter, and the control parameter includes a parameter indicating that the request message carries the first indication information.

For ease of understanding, the following describes, with reference to a specific example, a manner in which the request message carries the parameter required for sensing measurement in the case shown in Manner 2.

Example 2: An example in which the request message is an SBP request frame, and the first indication information is included in an SBP parameters element in the SBP request frame is used for description.

As shown in FIG. 17, the first indication information is included in the SBP parameters element, and the SBP parameters element is equivalent to the parameter required for sensing measurement. It can be learned from FIG. 17 that, compared with the SBP parameters element in the SBP request frame shown in FIG. 5, the SBP parameters element in this embodiment may carry a link indication (Link Indication) field or a mapped link bitmap (Mapped Link Bitmap) field. It should be understood that in Example 2, the request message is the SBP request frame. The SBP request frame includes the first indication information. The link indication (Link Indication) field shown in FIG. 17 is equivalent to the first indication information.

It should be noted that FIG. 17 shows a frame format of an SBP request frame that covers a plurality of cases. As shown in FIG. 17, a length of the link indication field is 0 or variable. If the length is 0, it indicates that the field does not exist; or if the length is not 0, the length of the field is variable. If the request message includes the information about the at least one sensing responder, the specific length of the field may be determined based on a quantity of sensing responders in a to-be-indicated sensing responder and link mapping situation. This is not limited in this embodiment. As shown in FIG. 17, a length of the mapped link bitmap field is 0 or variable. If the length is 0, it indicates that the field does not exist; or if the length is not 0, the length of the field is variable.

It should be understood that in Example 2, the request message is the SBP request frame. The SBP request frame includes the first indication information. The link indication field shown in FIG. 17 is equivalent to the first indication information. That is, the SBP request frame includes the link indication field. It may be understood that the length of the link indication field needs to be variable rather than 0. FIG. 17 shows a frame format that is of the SBP request frame and that includes a plurality of cases. The length of the mapped link bitmap field in the SBP request frame shown in FIG. 17 is set to 0, and the length of the link indication field is set to variable, to indicate the SBP request frame in Example 2.

For example, the length of the link indication field may be n*6. A value of n is related to the quantity of sensing responders provided by the first MLD.

For example, whether the SBP parameters element carries the link indication field or the mapped link bitmap field may be indicated by adding corresponding indication information to SBP parameters control.

It can be learned from FIG. 17 that, compared with the SBP parameters control shown in FIG. 5, SBP parameters control in this embodiment includes the link indication present (Link Indication Present) or the mapped link bitmap present (Mapped Link Bitmap Present) field. Specifically, the link indication present field indicates whether the SBP parameters element carries the link indication, and the mapped link bitmap present field indicates whether the SBP parameters element carries the mapped link bitmap field.

In a possible implementation, the first indication information includes a first control field (which is referred to as a link bitmap control (Link Bitmap Control) field below), a mandatory link indication field (which is referred to as a mandatory link bitmap (Mandatory Link Bitmap) field below), or a preferred link indication field (which is referred to as a preferred link bitmap (Preferred Link Bitmap) field below). The first control field is used to control the mandatory link indication field and the preferred link indication field (for example, control whether the mandatory link indication field and the preferred link indication field exist), the mandatory link indication field indicates a mandatory link for all sensing responders, and the preferred link indication field indicates a preferred link for all the sensing responders.

For example, if the first indication information includes the mandatory link indication field indicating the link #1, and further includes the preferred link indication field indicating the link #1 and the link #2, it indicates that the first MLD expects all the sensing responders to perform sensing measurement on the link #1 and the link #2, and the link #1 is mandatory.

For example, the first indication information includes information (referred to as a mandatory link bitmap present (Mandatory Link Bitmap Present) field below) indicating whether the mandatory link indication field exists and information (referred to as a preferred link bitmap present (Preferred Link Bitmap Present) field below) indicating whether the preferred link indication field exists.

Further, the first indication information may further include information indicating a quantity of links (referred to as a quantity of links (Number of Links) field below). The information indicating the quantity of links indicates a quantity of links corresponding to the first sensing responder, and the information indicating the quantity of links may also be used as a field in first control information.

For example, possible forms of the first indication information is the case shown in FIG. 12(a) to FIG. 12(c). Details are not described herein again.

In another possible implementation, the first indication information includes a second control field (which is referred to as a link bitmap control (Link Bitmap Control) field below), a link identifier field (which is referred to as a link bitmap (Link Bitmap) field below), and a mandatory indication field (which is referred to as a mandatory link indication bitmap (Mandatory Link Indication Bitmap) field below). The second control field is used to control the link field and the mandatory indication field (for example, control whether the link identifier field and the mandatory indication field exist), the link identifier field indicates at least one link provided by the first MLD for all sensing responders, and the mandatory indication indicates whether the at least one link indicated by the link identifier field is mandatory.

For example, if the first indication information includes the link identifier field indicating the link #1 and the link #2, and further includes the mandatory indication field indicating that the link #1 is mandatory and the link #2 is optional, it indicates that the first station expects all the sensing responders to perform sensing measurement on the link #1 and the link #2, and the link #1 is mandatory.

For example, the second control field includes information (referred to as a link bitmap present (Link ID Bitmap Present) field below) indicating whether the link identifier field exists and information (referred to as a mandatory link indication bitmap present (Mandatory Link Indication Bitmap Present) field below) indicating whether the mandatory indication field exists.

Further, the first indication information may further include information indicating a quantity of links (referred to as a quantity of links (number of links) field below). The information indicating the quantity of links indicates a quantity of links corresponding to all sensing responders. Optionally, when the first indication information includes the information indicating the quantity of links, the second control field may further include information indicating whether the information indicating the quantity of links exists (referred to as quantity of links present (Number of Links Present) below). The information indicating the quantity of links may also be used as a field in the second control information.

For example, possible forms of the first indication information is the case shown in FIG. 13(a) and FIG. 13(b). Details are not described herein again.

It should be noted that in the example shown in FIG. 17, that the first indication information is included in the SBP parameters element in the SBP request frame is merely an example, and does not constitute any limitation on the protection scope of this application.

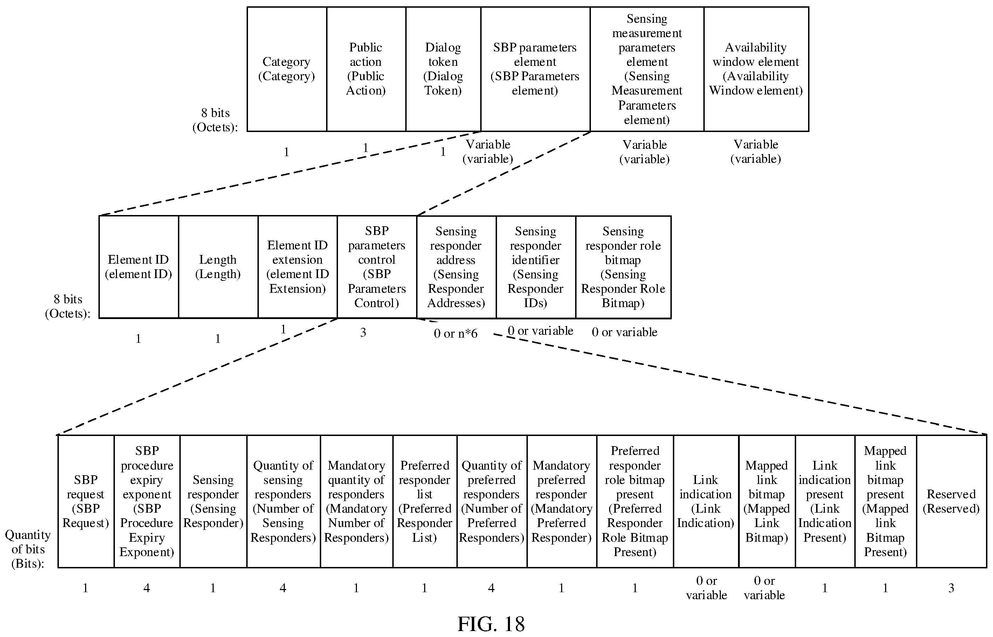

For example, in this embodiment, the first indication information may be further included in the SBP parameters control (SBP Parameters Control) field. As shown in FIG. 18, in the SBP request frame shown in FIG. 18, the link indication (Link Indication) field or the mapped link bitmap (Mapped Link Bitmap) field may be carried in the SBP parameters control field.

For another example, the first indication information may be split into different content, and the different content may be separately carried in the SBP parameters element and the SBP parameters control field.

In a possible implementation, control-related information in the first indication information is carried in the SBP parameters control field, and other information is carried in the SBP parameters element. For example, the first control field in the first indication information is carried in the SBP control parameter of the request message, and the mandatory link indication (Mandatory Link Bitmap) field and the preferred link indication (Preferred Link Bitmap) field are carried in the SBP parameters element of the request message.

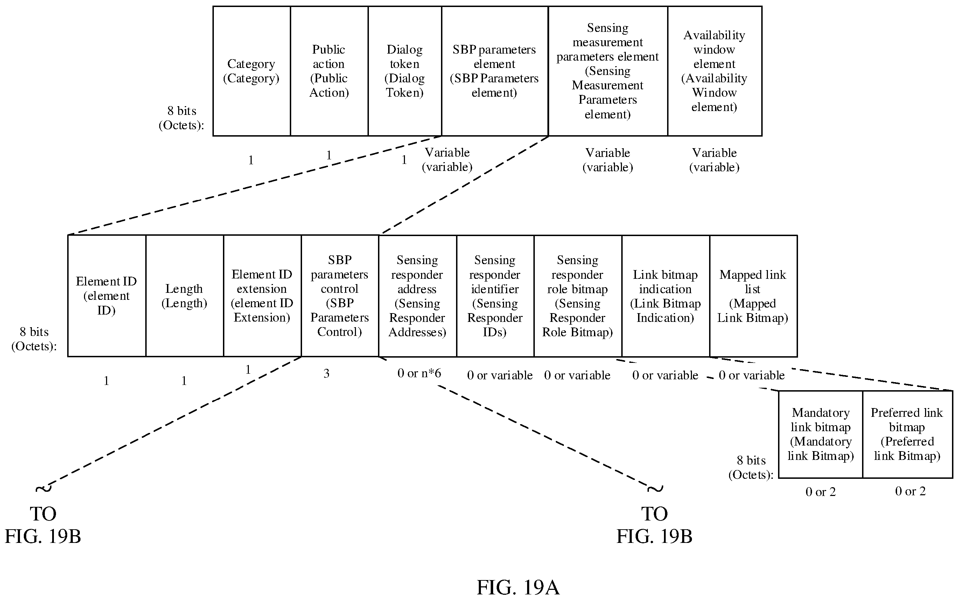

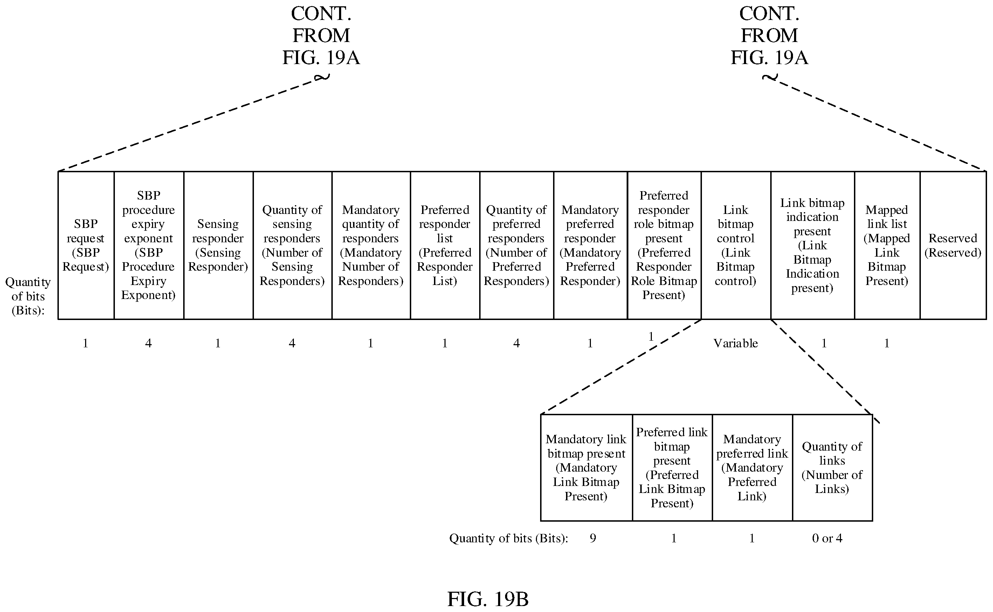

For example, in this implementation, the link indication (Link Indication) field is split into two fields: the link control (Link Control) field and the link bitmap indication (Link Bitmap Indication) field. The link control (Link Control) field is carried in an SBP parameters control field, and the link bitmap indication (Link Bitmap Indication) field is carried in the SBP parameters element field, as shown in FIG. 19A and FIG. 19B.

In another possible implementation, control-related information in the first indication information is carried in the SBP parameters control field, and other information is carried in the SBP parameters element. For example, the second control field in the first indication information is carried in the SBP control parameter of the request message, and the link identifier field and the mandatory indication field are carried in the SBP parameters element of the request message.

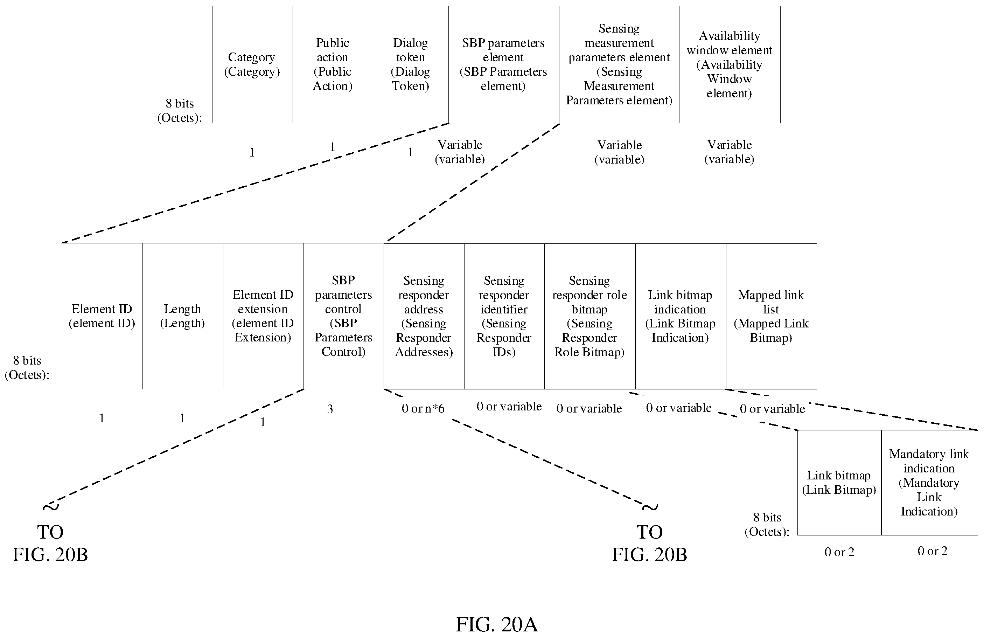

For example, in this implementation, the link indication (Link Indication) field is split into two fields: the link control (Link Control) field and the link bitmap indication (Link Bitmap Indication) field. The link control (Link Control) field is carried in an SBP parameters control field, and the link bitmap indication (Link Bitmap Indication) field is carried in the SBP parameters element field, as shown in FIG. 20A and FIG. 20B.

It can be learned from the foregoing that, in the case shown in Example 2, the first indication information may indicate link situations corresponding to all sensing responders participating in sensing measurement. To be specific, for the sensing by proxy initiator, the link situations corresponding to all the sensing responders are the same, and no indication needs to be separately performed for different sensing responders, thereby improving indication efficiency.

As shown above, the SBP request frame includes an ISTA availability window information field (ISTA Availability Window Info Field) (the ISTA availability window information field shown in FIG. 6). In this case, the request message in this embodiment may further include information about a second availability window. The information about the second availability window includes information about an availability window corresponding to a second link. The second link is any one of a link indicated by the first indication information; or the second link may not be any one of a link indicated by the first indication information. For example, if the SBP initiator does not participate in sensing measurement and receives only an SBP report, a link of the SBP initiator may be different from the link indicated by the first indication information, because the link indicated by the first indication information is a link of the sensing responder participating in sensing measurement. The information about the availability window corresponding to the second link includes an identifier of the second link.

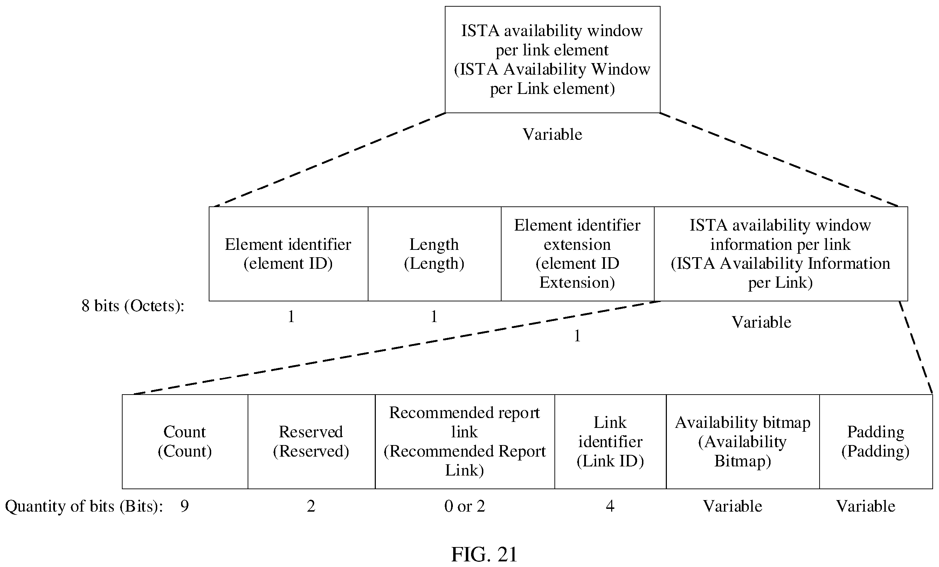

As shown in FIG. 21, a difference between the ISTA availability window information field in this embodiment and the ISTA availability window information field shown in FIG. 6 lies in that the ISTA availability window information field in this embodiment is for each link, one link corresponds to one ISTA availability window information element (ISTA Availability Window per Link element), and the element includes a corresponding link identifier (Link ID) field and a recommend report link (Recommended Report Link) field. The recommend report link field is optional.

For example, when the first MLD participates in sensing measurement, the recommended report link field may indicate whether the link is recommended to receive a report. For example, when the first MLD participates in sensing measurement in some high-speed moving scenarios, a high measurement frequency (measurement on a link with a high frequency) is required. Receiving a report on such a link may affect the measurement frequency. Therefore, the link receiving the report and a link participating in sensing may be distinguished. Therefore, the recommended report link field indicates whether the link is a link recommended to receive a report.

Further, after receiving the request message, the second MLD may select, based on a measurement environment, a sensing responder actually participating in sensing measurement. For example, the second MLD may determine, based on communication quality, the sensing responder participating in sensing measurement.

For example, the second MLD may feed back, by using a response message in response to the request message, information about the determined sensing responder participating in sensing measurement and a link situation corresponding to the sensing responder participating in sensing measurement.

Optionally, the response message may be referred to as an SBP response frame, a multi-link SBP response frame, or an SBP setup response frame. It should be understood that a name of a message is not limited in this embodiment, and all messages that can implement a function of the response message may be understood as the response message in this embodiment.

In a possible implementation, corresponding to Manner 1, if the request message carries at least one piece of first indication information, when a sensing responder in the at least one sensing responder is determined, it is determined that a mandatory link corresponding to the sensing responder is mandatory.

In this implementation, the response message includes information about the sensing responder participating in the SBP measurement and second indication information, and the second indication information indicates a link onto which the sensing responder participating in the SBP measurement is mapped.

Optionally, the response message includes a parameter indicating that the response message carries the second indication information.

Example 3: An example in which the response message is an SBP response frame, and the second indication information is included in an SBP parameters element in the SBP request frame is used for description.

For ease of understanding, a structure of the SBP response frame in the case shown in Example 3 is described with reference to FIG. 10. When the SBP parameters element shown in FIG. 10 is the SBP parameters element carried in the SBP response frame, the second indication information is the mapped link list field shown in FIG. 10. A parameter indicating that the response message carries the second indication information is the mapped link list present field shown in FIG. 10.

In another possible implementation, corresponding to Manner 2, if the request message carries the first indication information indicating link situations of all sensing responders, the response message includes information about at least one link, and the at least one link is a part or all of the links indicated by the first indication information.

Optionally, the response message includes a parameter indicating that the response message carries the information about the at least one link.

Example 4: An example in which the response message is an SBP response frame, and information about at least one link is included in an SBP parameters element in the SBP request frame is used for description.

For ease of understanding, a structure of the SBP response frame in the case shown in Example 4 is described with reference to FIG. 17. When the SBP parameters element shown in FIG. 17 is the SBP parameters element carried in the SBP response frame, the information about the at least one link is the mapped link bitmap field in FIG. 17, and the second MLD finally selects a link based on link information indicated by the first indication information. It should be understood that, when the SBP parameters element is carried in the SBP response frame, the mapped link bitmap field exists.

As shown above, the SBP response frame includes an RSTA availability window information field (RSTA Availability Window Info Field) (the RSTA availability window information field shown in FIG. 7). In this case, the response message in this embodiment may further include information about a first availability window. The information about the first availability window includes information about an availability window corresponding to a first link. The first link is any one of a link indicated by the second indication information; or the first link may not be any one of a link indicated by the second indication information. For example, if the SBP initiator does not participate in sensing measurement and receives only an SBP report, a link of the SBP initiator may be different from the link indicated by the second indication information, because the link indicated by the second indication information is a link of the sensing responder participating in sensing measurement. The information about the availability window corresponding to the first link includes an identifier of the first link.

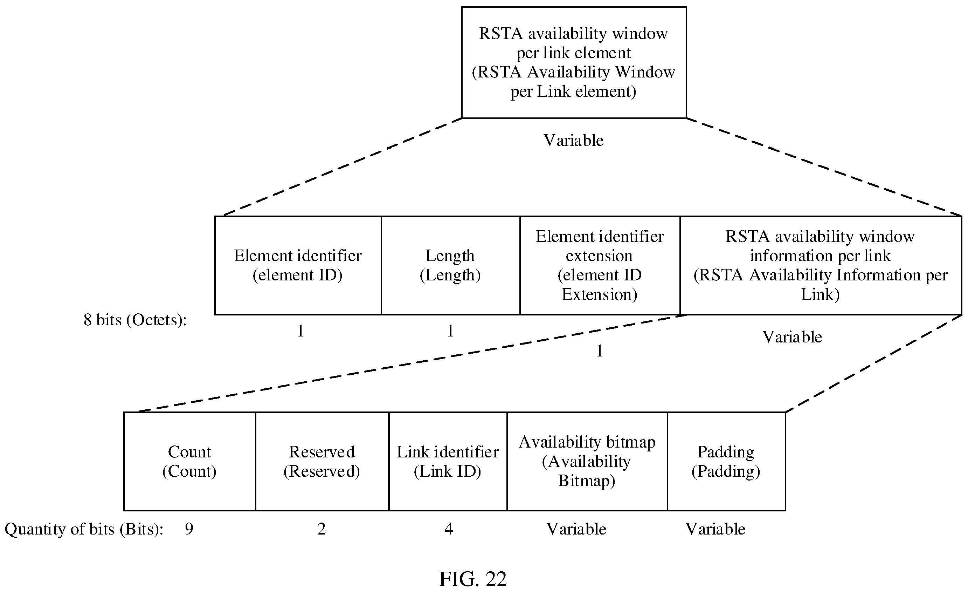

As shown in FIG. 22, a difference between the RSTA availability window information field in this embodiment and the RSTA availability window information field shown in FIG. 7 lies in that the RSTA availability window information field in this embodiment is for each link, one link corresponds to one RSTA availability window information element (RSTA Availability Window per Link element), and the element includes a corresponding link identifier (Link ID) field.

After SBP setup is completed, when the second MLD sets up a sensing measurement session and sends a sensing measurement request frame to a selected sensing responder, a sensing measurement parameters element in the sensing measurement request frame also carries the first indication information. The first indication information includes link indication information of the corresponding sensing responder.

For example, when setting up the sensing measurement session, the second MLD sends a multi-link sensing measurement request frame #1 and a multi-link sensing measurement request frame #2 to a selected sensing responder #1 and a selected sensing responder #2 respectively. The multi-link sensing measurement request frame #1 carries first indication information #1 to indicate a link corresponding to the sensing responder #1, and the multi-link sensing measurement request frame #2 carries first indication information #2 to indicate a link corresponding to the sensing responder #2.

For example, after receiving the request message, the second MLD may initiate a sensing measurement request to one or more sensing responders in the sensing measurement process based on an indication (for example, the first indication information) of a sensing responder link in the request message. In this case, the second MLD sends a sensing measurement request frame (or referred to as a multi-link sensing measurement setup request frame) to a sensing responder. Compared with a sensing measurement request frame sent by a sensing by proxy responder in an existing sensing measurement request initiation mechanism, in this application, because the sensing by proxy responder learns of link situations corresponding to different sensing responders based on the request message, or learns of, based on the request message, the link situations corresponding to all the sensing responders participating in SBP measurement, the sensing by proxy responder may use the sensing measurement request frame to carry a corresponding link information indication. For example, the sensing measurement request frame carries the responder and link mapping indication list field or the link indication field.

In a possible implementation, the responder and link mapping indication list field or the link indication field may be carried in a multi-link sensing measurement parameters element in the sensing measurement request frame.

In another possible implementation, the responder and link mapping indication list field or the link indication field may be carried in sensing common information in a multi-link sensing measurement parameters element in the sensing measurement request frame.

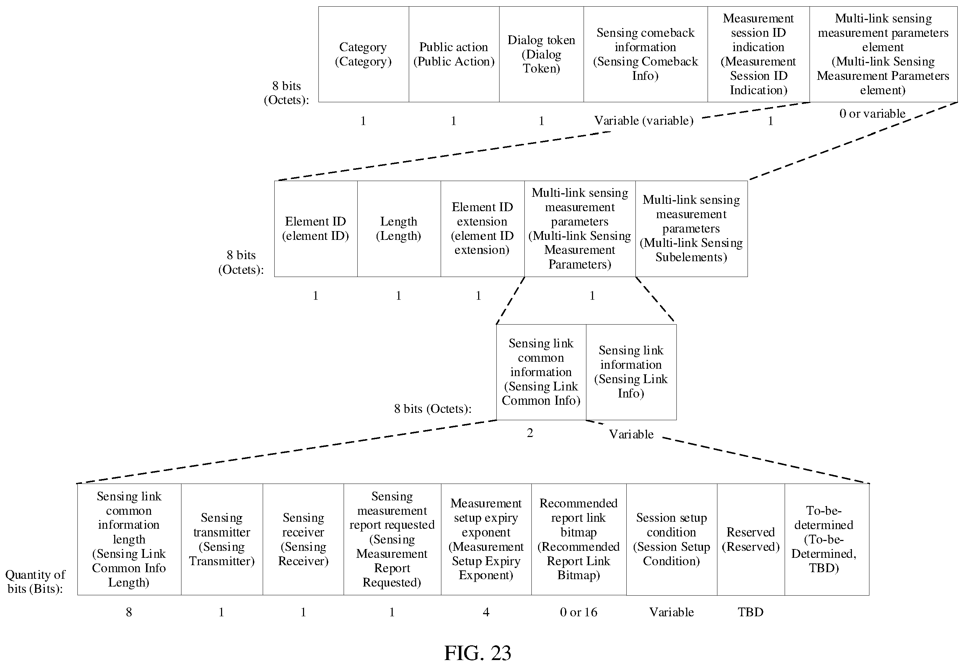

For ease of understanding, a structure of the sensing measurement request frame in this embodiment is briefly described with reference to FIG. 23.

As shown in FIG. 23, in this application, the sensing by proxy responder may enable a session setup condition (Session Setup Condition) field in the sensing common information in the multi-link sensing measurement parameters element of the sensing measurement request frame to be equivalent to the Responder and Link Mapping Indication List field or the Link Indication field, to indicate the link situation corresponding to the sensing responder.

It should be understood that the sensing measurement request frame shown in FIG. 23 is merely an example, and does not constitute any limitation on the protection scope of this application. In this embodiment, the sensing by proxy responder may add the indication of the sensing responder link to another parameter in the sensing measurement request frame. For example, the indication is carried in the multi-link sensing measurement parameters element. Details are not described herein again.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by a device (for example, a first station) may alternatively be implemented by a component (for example, a chip or a circuit) that can be used in the device.

It may be further understood that, some optional features in embodiments of this application may be independent of other features in some scenarios, or may be combined with other features in some scenarios. This is not limited.

The foregoing describes in detail the communication method provided in embodiments of this application with reference to FIG. 8. The foregoing communication methods are mainly described from a perspective of the first MLD. It can be understood that, to implement the foregoing functions, the first MLD includes corresponding hardware structures and/or software modules for performing the functions.

A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

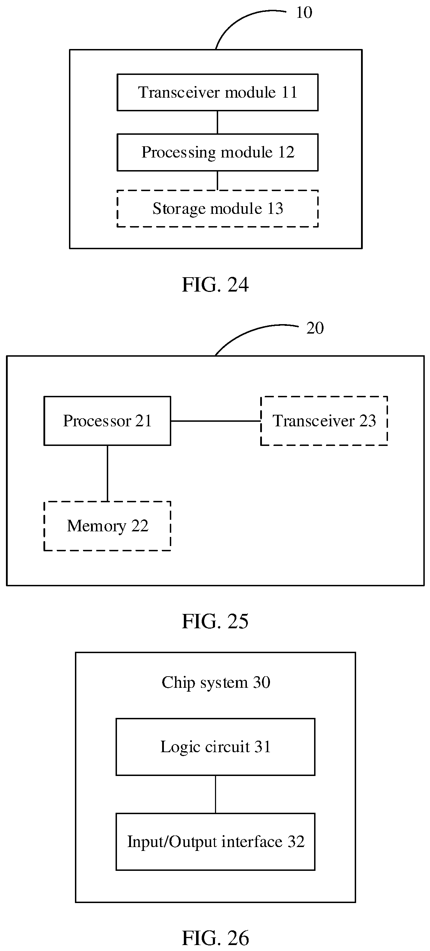

The following describes in detail a communication apparatus provided in embodiments of this application with reference to FIG. 24 to FIG. 26. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional modules of a transmitter device or a receiver device may be divided based on the foregoing method examples. For example, functional modules may be divided based on functions, or two or more functions may be integrated into one processing module. The integrated module may be implemented in a form of hardware, or may be implemented in a form of a software functional module. It should be noted that, in embodiments of this application, division into modules is an example, and is merely a logical functional division. In actual implementation, another division manner may be used. An example in which each functional module is obtained through division based on each corresponding function is used below for description.

FIG. 24 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing; or the transceiver module 11 is configured to perform receiving and sending related operations, and the processing module 12 is configured to perform an operation other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to cause the apparatus to implement actions of a device in the foregoing method embodiments.

In a design, the apparatus 10 may correspond to the first MLD in the foregoing method embodiment, or may be a component (for example, a chip) of the first MLD.

The apparatus 10 may implement a corresponding step or procedure performed by the first MLD in the foregoing method embodiments. The transceiver module 11 may be configured to perform receiving and sending related operations of the first MLD in the foregoing method embodiments. The processing module 12 may be configured to perform a processing related operation of the first MLD in the foregoing method embodiments.

In a possible implementation, the processing module 12 is configured to generate a request message. The request message is used to request to set up sensing by proxy SBP measurement, the request message includes first indication information, and the first indication information indicates a link onto which a first sensing responder is mapped. The transceiver module 11 is configured to send the request message to a second MLD.

When the apparatus 10 is configured to perform the method in FIG. 8, the transceiver module 11 may be configured to perform steps of receiving and sending information in the method, for example, step S820; and the processing module 12 may be configured to perform a processing step in the method, for example, step S810.

It should be understood that a specific process in which the units perform the foregoing corresponding steps is described in detail in the foregoing method embodiments, and for brevity, details are not described herein.

In another design, the apparatus 10 may correspond to the second MLD in the foregoing method embodiments, or may be a component (for example, a chip) of the second MLD.

The apparatus 10 may implement a corresponding step or procedure performed by the second MLD in the foregoing method embodiments. The transceiver module 11 may be configured to perform receiving and sending related operations of the second MLD in the foregoing method embodiments. The processing module 12 may be configured to perform a processing related operation of the second MLD in the foregoing method embodiments.

In a possible implementation, the processing module 12 and the transceiver module 11 are configured to receive a request message from a first MLD. The request message is used to request to set up sensing by proxy SBP measurement, the request message includes first indication information, and the first indication information indicates a link onto which a first sensing responder is mapped. The processing module 12 is configured to parse the request message.

When the apparatus 10 is configured to perform the method in FIG. 8, the transceiver module 11 may be configured to perform steps of receiving and sending information in the method, for example, step S820; and the processing module 12 may be configured to perform a processing step in the method.

It should be understood that a specific process in which the units perform the foregoing corresponding steps is described in detail in the foregoing method embodiments, and for brevity, details are not described herein.

It should be further understood that the apparatus 10 herein is presented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combined logic circuit, and/or another appropriate component that supports the described function. In an optional example, a person skilled in the art may understand that the apparatus 10 may be specifically a mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has a function of implementing corresponding steps performed by a device (for example, the first MLD) in the foregoing methods. The function may be implemented by hardware, or may be implemented by hardware executing corresponding software. The hardware or software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit, for example, the processing module, may be replaced with a processor, to separately perform receiving and sending operations and a related processing operation in the method embodiments.

In addition, the transceiver module 11 may alternatively be a transceiver circuit (for example, may include a receiving circuit and a sending circuit), and the processing module may be a processing circuit.

FIG. 25 is a diagram of another communication apparatus 20 according to an embodiment of this application. The apparatus 20 includes a processor 21. The processor 21 is configured to execute a computer program or instructions stored in a memory 22, or read data/signaling stored in a memory 22, to perform the methods in the foregoing method embodiments. Optionally, there are one or more processors 21.

Optionally, as shown in FIG. 25, the apparatus 20 further includes a memory 22, and the memory 22 is configured to store a computer program or instructions and/or data. The memory 22 and the processor 21 may be integrated together, or may be disposed separately. Optionally, there are one or more memories 22.

Optionally, as shown in FIG. 25, the apparatus 20 further includes a transceiver 23, and the transceiver 23 is configured to receive and/or send a signal. For example, the processor 21 is configured to control the transceiver 23 to receive and/or send a signal.

In a solution, the apparatus 20 is configured to implement operations performed by the first MLD or the second MLD in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor, or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

FIG. 26 is a diagram of a chip system 30 according to an embodiment of this application. The chip system 30 (also referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, to cause the chip system 30 to implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the first MLD or the second MLD in the foregoing method embodiments.

For example, the logic circuit 31 is configured to implement a processing related operation performed by the first MLD or the second MLD in the foregoing method embodiments, and the input/output interface 32 is configured to implement a sending and/or receiving related operation performed by the first MLD or the second MLD in the foregoing method embodiments.

An embodiment of this application further provides a computer-readable storage medium. The computer-readable storage medium stores computer instructions for implementing the method performed by a device in the foregoing method embodiments.

For example, when the computer program is executed by a computer, the computer is enabled to implement the method performed by the first MLD or the second MLD in the foregoing method embodiments.

An embodiment of this application further provides a computer program product, including instructions. When the instructions are executed by a computer, the method performed by the first MLD or the second MLD in the foregoing method embodiments is implemented.

An embodiment of this application further provides a communication system, including the foregoing first MLD and the foregoing second MLD.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the foregoing usable medium may include but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
generating, by a first multi-link device MLD, a request message, wherein the request message is used to request to set up sensing by proxy SBP measurement, the request message comprises first indication information, and the first indication information indicates a link onto which a first sensing responder is mapped; and
sending, by the first MLD, the request message to a second MLD.

2. The method according to claim 1, wherein the request message comprises information about at least one sensing responder and at least one piece of first indication information respectively corresponding to the at least one sensing responder, the first sensing responder is any one of the at least one sensing responder, and the first indication information is first indication information corresponding to the first sensing responder in the at least one piece of first indication information.

3. The method according to claim 2, wherein the method further comprises:
receiving, by the first MLD, a response message from the second MLD, wherein the response message comprises information about a sensing responder participating in the SBP measurement and second indication information, and the second indication information indicates a link onto which the sensing responder participating in the SBP measurement is mapped.

4. The method according to claim 3, wherein the response message comprises a parameter indicating that the response message carries the second indication information.

5. The method according to claim 3 or 4, wherein the response message comprises information about a first availability window, and the information about the first availability window comprises information about an availability window corresponding to a first link; and
the information about the availability window corresponding to the first link comprises an identifier of the first link.

6. The method according to claim 1, wherein the first indication information further indicates a link onto which a sensing responder participating in the SBP measurement other than the first responder is mapped, and the first sensing responder is any one of a sensing responder participating in the SBP measurement.

7. The method according to claim 6, wherein the method further comprises:
receiving, by the first MLD, a response message from the second MLD, wherein the response message comprises information about at least one link, and the at least one link is a part or all of links indicated by the first indication information.

8. The method according to any one of claims 1 to 7, wherein the first indication information comprises a first control field and one or both of a mandatory link indication field and a preferred link indication field, the first control field comprises one or both of information about the mandatory link indication field and information about the preferred link indication field, the mandatory link indication field indicates a mandatory link for the first sensing responder, and the preferred link indication field indicates a preferred link for the first sensing responder.

9. The method according to claim 8, wherein the first control field comprises information indicating whether the first indication information carries the mandatory link indication field, and/or information indicating whether the first indication information carries the preferred link indication field.

10. The method according to claim 8 or 9, wherein the first control field and one or both of the mandatory link indication field and the preferred link indication field are carried in an SBP parameters element of the request message; or
the first control field is carried in an SBP control parameter of the request message, and one or both of the mandatory link indication field and the preferred link indication field are carried in the SBP parameters element of the request message.

11. The method according to any one of claims 1 to 7, wherein the first indication information comprises a second control field and one or both of a link identifier field and a mandatory indication field, the second control field comprises information about the link identifier field and/or information about the mandatory indication field, the link identifier field indicates at least one link provided by the first station for the first sensing responder, and the mandatory indication indicates whether each of the at least one link is mandatory.

12. The method according to claim 11, wherein the second control field comprises information indicating whether the first indication information carries the link identifier field, and/or information indicating whether the first indication information carries the mandatory indication field.

13. The method according to claim 11 or 12, wherein the second control field and one or both of the link identifier field and the mandatory indication field are carried in an SBP parameters element of the request message; and
the second control field is carried in an SBP control parameter of the request message, and one or both of the link identifier field and the mandatory indication field are carried in the SBP parameters element of the request message.

14. The method according to any one of claims 1 to 13, wherein the request message further comprises information about a second availability window, and the information about the second availability window comprises information about an availability window corresponding to a second link; and
the information about the availability window corresponding to the second link comprises an identifier of the second link.

15. A communication method, comprising:
receiving, by a second multi-link device MLD, a request message from a first MLD, wherein the request message is used to request to set up sensing by proxy SBP measurement, the request message comprises first indication information, and the first indication information indicates a link onto which a first sensing responder is mapped; and
parsing, by the second MLD, the request message.

16. The method according to claim 15, wherein the request message comprises information about at least one sensing responder and at least one piece of first indication information respectively corresponding to the at least one sensing responder, the first sensing responder is any one of the at least one sensing responder, and the first indication information is first indication information corresponding to the first sensing responder in the at least one piece of first indication information.

17. The method according to claim 16, wherein the method further comprises:
determining, by the second MLD based on the at least one piece of first indication information, a sensing responder participating in the SBP in the at least one sensing responder and a link onto which each of the sensing responder participating in the SBP is mapped; and
sending, by the second MLD, a response message to the first MLD, wherein the response message comprises information about the sensing responder participating in the SBP measurement and second indication information, and the second indication information indicates a link onto which the sensing responder participating in the SBP measurement is mapped.

18. The method according to claim 17, wherein the response message comprises a parameter indicating that the response message carries the second indication information.

19. The method according to claim 17 or 18, wherein the response message comprises information about a first availability window, and the information about the first availability window comprises information about an availability window corresponding to a first link; and
the information about the availability window corresponding to the first link comprises an identifier of the first link.

20. The method according to claim 15, wherein the first indication information further indicates a link onto which a sensing responder participating in the SBP measurement other than the first responder is mapped, and the first sensing responder is any one of a sensing responder participating in the SBP measurement.

21. The method according to claim 20, wherein the method further comprises:
determining, by the second MLD based on the first indication information, at least one link corresponding to the sensing responder participating in the SBP; and
sending, by the second MLD, a response message to the first MLD, wherein the response message comprises information about the at least one link, and the at least one link is a part or all of links indicated by the first indication information.

22. The method according to any one of claims 15 to 21, wherein the first indication information comprises a first control field and one or both of a mandatory link indication field and a preferred link indication field, the first control field comprises one or both of information about the mandatory link indication field and information about the preferred link indication field, the mandatory link indication field indicates a mandatory link for the first sensing responder, and the preferred link indication field indicates a preferred link for the first sensing responder.

23. The method according to claim 22, wherein the first control field comprises information indicating whether the first indication information carries the mandatory link indication field, and/or information indicating whether the first indication information carries the preferred link indication field.

24. The method according to claim 22 or 23, wherein the first control field and one or both of the mandatory link indication field and the preferred link indication field are carried in an SBP parameters element of the request message; or
the first control field is carried in an SBP control parameter of the request message, and one or both of the mandatory link indication field and the preferred link indication field are carried in the SBP parameters element of the request message.

25. The method according to any one of claims 15 to 21, wherein the first indication information comprises a second control field and one or both of a link identifier field and a mandatory indication field, the second control field comprises information about the link identifier field and/or information about the mandatory indication field, the link identifier field indicates at least one link provided by the first station for the first sensing responder, and the mandatory indication indicates whether each of the at least one link is mandatory.

26. The method according to claim 25, wherein the second control field comprises information indicating whether the first indication information carries the link identifier field, and/or information indicating whether the first indication information carries the mandatory indication field.

27. The method according to claim 25 or 26, wherein the second control field and one or both of the link identifier field and the mandatory indication field are carried in an SBP parameters element of the request message; and
the second control field is carried in an SBP control parameter of the request message, and one or both of the link identifier field and the mandatory indication field are carried in the SBP parameters element of the request message.

28. The method according to any one of claims 15 to 27, wherein the request message further comprises information about a second availability window, and the information about the second availability window comprises information about an availability window corresponding to a second link; and
the information about the availability window corresponding to the second link comprises an identifier of the second link.

29. A communication apparatus, comprising a processor, wherein the processor is coupled to a memory, the memory is configured to store a computer program or instructions, and the processor is configured to execute the computer program or the instructions in the memory, to enable the apparatus to perform the method according to any one of claims 1 to 14, or enable the apparatus to perform the method according to any one of claims 15 to 28.

30. A communication system, wherein the communication system comprises a first multi-link MLD device and a second MLD device, the first multi-link MLD device is configured to perform the method according to any one of claims 1 to 14, and the second MLD device is configured to perform the method according to any one of claims 15 to 28.

31. A computer-readable storage medium, wherein the computer-readable storage medium stores a computer program or instructions, and when the computer program or the instructions are run on a computer, the computer is enabled to perform the method according to any one of claims 1 to 28.

32. A chip system, comprising a processor, configured to invoke a computer program from a memory and run the computer program, to enable a communication device on which the chip system is installed to perform the method according to any one of claims 1 to 28.

33. A computer program product, wherein when the computer program product is run on a computer, the computer is enabled to perform the method according to any one of claims 1 to 28.
